(19) Europäisches Patentamt
European Patent Office
Office européen des brevets

(11) EP 3 457 476 B1

(12) **EUROPEAN PATENT SPECIFICATION**

(45) Date of publication and mention of the grant of the patent:
**07.10.2020 Bulletin 2020/41**

(51) Int Cl.:
***H01M 4/485*** *(2010.01)* ***H01M 4/62*** *(2006.01)*
*H01M 10/052* *(2010.01)*

(21) Application number: **18157343.7**

(22) Date of filing: **19.02.2018**

(54) **ACTIVE MATERIAL, ELECTRODE, SECONDARY BATTERY, BATTERY PACK, AND VEHICLE**

AKTIVMATERIAL, ELEKTRODE, SEKUNDÄRBATTERIE, BATTERIEPACK UND FAHRZEUG

MATÉRIAU ACTIF, ÉLECTRODE, BATTERIE SECONDAIRE, BLOC -BATTERIE ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2017 JP 2017178774**

(43) Date of publication of application:
**20.03.2019 Bulletin 2019/12**

(73) Proprietor: **KABUSHIKI KAISHA TOSHIBA**
**Minato-ku**
**Tokyo**
**105-8001 (JP)**

(72) Inventors:
- **Harada, Yasuhiro**
  **Tokyo, 105-8001 (JP)**
- **Takami, Norio**
  **Tokyo, 105-8001 (JP)**
- **Ise, Kazuki**
  **Tokyo, 105-8001 (JP)**

(74) Representative: **Hoffmann Eitle**
**Patent- und Rechtsanwälte PartmbB**
**Arabellastraße 30**
**81925 München (DE)**

(56) References cited:
- **YANG CHAO ET AL: "Cu0.02Ti0.94Nb2.04O7: An advanced anode material for lithium-ion batteries of electric vehicles", JOURNAL OF POWER SOURCES, ELSEVIER SA, CH, vol. 328, 13 August 2016 (2016-08-13), pages 336-344, XP029711318, ISSN: 0378-7753, DOI: 10.1016/J.JPOWSOUR.2016.08.027**
- **RENTSCHLER T ED - OGATA MASAO: "Doping of the quadruple perovskites of type Nd"2Ba"2Cu"2Ti"2"-"xM"xO"1"1, M = Mn, Fe, Co, Al and NdBa"3Cu"2Ti"1"+"xNb"1"-"xO"1"1", PHYSICA C, NORTH-HOLLAND PUBLISHING, AMSTERDAM, NL, vol. 276, no. 1-2, 1 March 1997 (1997-03-01), pages 109-119, XP004063697, ISSN: 0921-4534, DOI: 10.1016/S0921-4534(97)00015-4**
- **RUEI-SUNG YU ET AL: "Structure and optoelectronic properties of multi-element oxide thin film", APPLIED SURFACE SCIENCE, ELSEVIER, AMSTERDAM, NL, vol. 257, no. 14, 30 January 2011 (2011-01-30), pages 6073-6078, XP028368516, ISSN: 0169-4332, DOI: 10.1016/J.APSUSC.2011.01.139 [retrieved on 2011-02-05]**
- **WANG XIAOXIANG ET AL: "Promotional synergistic effect of Cu and Nb doping on a novel Cu/Ti-Nb ternary oxide catalyst for the selective catalytic reduction of NOxwith NH3", APPLIED CATALYSIS B: ENVIRONMENTAL, ELSEVIER, AMSTERDAM, NL, vol. 220, 8 August 2017 (2017-08-08), pages 234-250, XP085198003, ISSN: 0926-3373, DOI: 10.1016/J.APCATB.2017.08.021**
- **LI-XIA PANG ET AL: "Sintering behavior, structures and microwave dielectric properties of a rutile solid solution system: (AxNb2x)Ti1-3xO2 (A=Cu, Ni)", JOURNAL OF ELECTROCERAMICS, KLUWER ACADEMIC PUBLISHERS, BO, vol. 23, no. 1, 1 May 2008 (2008-05-01), pages 13-18, XP019730542, ISSN: 1573-8663**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 457 476 B1

## Description

FIELD

The present disclosure relates to an active material, an electrode, a secondary battery, a battery pack, and a vehicle.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, the electrode potential an oxide of titanium is about 1.5 V (vs. $Li/Li^+$) relative to metallic lithium, which is higher (i.e., more noble) in comparison to potentials of carbon based negative electrodes. The potential of an oxide of titanium is attributed to the redox reaction between $Ti^{3+}$ and $Ti^{4+}$ upon electrochemical insertion and extraction of lithium, and is therefore electrochemically restricted. It is also a fact that rapid charge/discharge of lithium ions can be performed stably at a high electrode potential of about 1.5 V (vs. $Li/Li^+$). Conventionally, it has therefore been difficult to drop the potential of the electrode in order to improve the energy density.

On the other hand, considering the capacity per unit weight, the theoretical capacity of titanium dioxide (anatase structure) is about 165 mAh/g, and the theoretical capacity of spinel type lithium-titanium composite oxides such as $Li_4Ti_5O_{12}$ is about 180 mAh/g. On the other hand, the theoretical capacity of a general graphite based electrode material is 385 mAh/g and greater. As such, the capacity density of an oxide of titanium is significantly lower than that of the carbon based negative electrode material. This is due to there being only a small number of lithium-insertion sites in the crystal structure, and lithium tending to be stabilized in the structure, and thus, substantial capacity being reduced.

Journal of Power Sources 328 (2016) 336-344 describes the preparation $Cu_{0.02}Ti_{0.94}Nb_{2.04}O_7$ and the evaluation thereof as anode materials for lithium-ion batteries.

BRIEF DESCRIPTION OF THE DRAWINGS

FIG. 1 is a schematic diagram showing the crystal structure of monoclinic $TiNb_2O_7$;
FIG. 2 is a schematic diagram of the crystal structure of FIG. 1 as viewed from another direction;
FIG. 3 is a cross-sectional view schematically showing an example of a secondary battery according to an approach;
FIG. 4 is an enlarged cross-sectional view of section A of the secondary battery shown in FIG. 3;
FIG. 5 is a partially cut-out perspective view schematically showing another example of the secondary battery according to the approach;
FIG. 6 is an enlarged cross-sectional view of section B of the secondary battery shown in FIG. 5;
FIG. 7 is a perspective view schematically showing an example of a battery module according to an approach;
FIG. 8 is an exploded perspective view schematically showing an example of a battery pack according to an approach;
FIG. 9 is a block diagram showing an example of an electric circuit of the battery pack shown in FIG. 8;

FIG. 10 is a cross-sectional view schematically showing an example of a vehicle according to an approach; and
FIG. 11 is a diagram schematically showing another example of the vehicle according to the approach.

DETAILED DESCRIPTION

According to one approach, an active material containing a niobium-titanium composite oxide, Cu and at least one element M selected from the group consisting of Na, K, Si, S, Sn, P, Ta, Mo, Mn, Co, Ni and Fe,
wherein a molar ratio (Cu/Ti) of Cu to Ti satisfies formula (I):

$$1\times10^{-4} \leq Cu/Ti \leq 0.5 \qquad (I),$$

a molar ratio (M/Ti) of the element M to Ti satisfies formula (II):

$$0 < M/Ti \leq 0.6 \qquad (II),$$

and a molar ratio (Nb/Ti) of Nb to Ti satisfies formula (III):

$$1 \leq Nb/Ti \leq 5 \qquad (III)$$

is provided.
According to another approach, an electrode including the active material of the above approach is provided.
According to still another approach, a secondary battery including a positive electrode, a negative electrode, and an electrolyte is provided. The negative electrode is the electrode according to the above approach.
According to still another approach, a battery pack including a secondary battery (or secondary batteries) is provided. The secondary battery (or secondary batteries) of the battery pack includes the secondary battery according to the above approach.
According to yet another approach, a vehicle including the battery pack according to the above approach is provided.
According to the above approaches, provided are an active material which exhibits high energy density and can achieve a secondary battery simultaneously realizing rapid charge/discharge performance and long life property, an electrode including the active material, a secondary battery including the electrode, a battery pack including the secondary battery, and a vehicle including the battery pack.
In view of the problem that the capacity per unit weight of oxides of titanium such as titanium dioxide and spinel type lithium titanium composite oxide is low, a new electrode material containing Ti and Nb is being investigated. Such a material is expected to have a high charge/discharge capacity. Particularly, a composite oxide represented by $TiNb_2O_7$ has a high theoretical capacity exceeding 300 mAh/g. However, composite oxides such as $TiNb_2O_7$ have low electron conductivity and high side reactivity with an electrolytic solution, so that resistance of the battery tends to increase.
Hereinafter, approaches will be described with reference to the drawings.

[First Approach]

An active material according to the first approach contains a niobium-titanium composite oxide, Cu and at least one element M selected from the group consisting of Na, K, Si, S, Sn, P, Ta, Mo, Mn, Co, Ni and Fe,
wherein a molar ratio (Cu/Ti) of Cu to Ti satisfies formula (I):

$$1\times10^{-4} \leq Cu/Ti \leq 0.5 \qquad (I),$$

a molar ratio (M/Ti) of the element M to Ti satisfies formula (II):

$$0 < M/Ti \leq 0.6 \qquad (II),$$

and a molar ratio (Nb/Ti) of Nb to Ti satisfies formula (III):

$$1 \leq Nb/Ti \leq 5 \qquad (III).$$

This active material may be used as an active material for batteries, for example.

As will be described in detail later, the niobium-titanium composite oxide has a high capacity per unit weight by virtue of having high energy density, while being able to provide a secondary battery capable of stably repeating rapid charging and discharging.

On the other hand, the niobium-titanium composite oxide is poor in sintering properties, and is thus an electrically insulating material with poor electron conductivity. For that reason, in order to improve the sintering properties and the electron conductivity of the niobium-titanium composite oxide, elements such as K and Fe are added, or carbon coating is carried out. On the other hand, when these elements are added, or when carbon coating is carried out, defects (oxygen deficiency) are likely to occur in oxide ions in a crystal lattice. The reason why defects are likely to be caused by element addition is considered to be that oxygen deficiency is induced by ease of occurrence of variation of valences of constituent elements during a firing process for the niobium-titanium composite oxide. The reason why defects are likely to be caused by the implementation of carbon coating is considered to arise from firing in a reducing atmosphere during carbon coating.

When the sintering properties and the electron conductivity are improved, an initial charge/discharge capacity and rate performance become high. On the other hand, in the state in which oxygen deficiency occurs, capacity reduction during a charge-and-discharge cycle is large. In addition, since side reactivity with an electrolyte is increased by oxygen deficiency, there is a problem that it is impossible to simultaneously realize rapid charge/discharge performance and life performance.

On the other hand, by having Cu contained in an active material in accordance with the present approach, it is possible to reduce an amount of oxygen deficiency in the niobium-titanium composite oxide due to element addition and carbon coating.

The active material of the approach further contains an element M in addition to the niobium-titanium composite oxide and Cu. The element M is at least one selected from the group consisting of Na, K, Si, S, Sn, P, Ta, Mo, Mn, Co, Ni and Fe. In the active material, the molar ratio of Cu to Ti (Cu/Ti) satisfies the formula (I). Further, the molar ratio of the element M to Ti (M/Ti) satisfies the formula (II). Furthermore, the molar ratio of Nb to Ti (Nb/Ti) satisfies the formula (III).

$$1\times10^{-4} \leq Cu/Ti \leq 0.5 \quad (I)$$

$$0 < M/Ti \leq 0.6 \quad (II)$$

$$1 \leq Nb/Ti \leq 5 \quad (III)$$

In the active material containing the niobium-titanium composite oxide, when the active material contains a Cu element in a molar ratio range of $1\times10^{-4} \leq Cu/Ti \leq 0.5$, the Fermi level of the niobium-titanium composite oxide can be lowered. As a result, electrons contributing to oxidation-reduction of a metal oxide depending on a firing environment become captured, so that oxygen deficiency may be effectively suppressed.

In the active material, the molar ratio (Nb/Ti) of Nb to Ti is within the range of 1 to 5. When the molar ratio (Nb/Ti) is less than 1, a uniform composite oxide phase of Nb and Ti is not obtained but phase separation occurs, leading to decreased electrode performance. When the molar ratio (Nb/Ti) is more than 5, there is excess amount of Nb relative to the amount of Li that can be inserted per unit lattice, and therefore, the electrode energy density per weight decreases.

By adding the element M to the active material in the state in which the active material contains Cu, it is possible to reduce the amount of oxygen deficiency due to element addition and carbon coating for the niobium-titanium composite oxide. The element M is selected from Na, K, Si, S, Sn, P, Ta, Mo, Mn, Co, Ni and Fe. The active material may contain only one kind or two or more kinds of the element M. More preferably, the element M is at least one selected from the group consisting of K, Fe, Ta, P, and Si.

Some portion of Nb contained in the niobium-titanium composite oxide does not contribute to an oxidation-reduction reaction. When the element M is contained in the active material in an amount of 0.6 or less (excluding zero) based on the molar ratio (M/Ti), Nb not contributing to an electrode reaction can be substituted, and therefore, the amount of oxygen deficiency of the niobium-titanium composite oxide can be lowered without any reduction in capacity. When the molar ratio (M/Ti) exceeds 0.6, there is decrease in the amount of Nb required with respect to the amount of Li that can be inserted, so the capacity of the active material decreases.

As described above, since the active material of the preferred aspect of the approach contains the niobium-titanium composite oxide, Cu, and the M element, the active material has high capacity and rapid charge/discharge performance, and, at the same time, oxygen deficiency is suppressed. Thus, even if an additive element is added or carbon coating is carried out to ensure electrical conductivity, performance deterioration due to oxygen deficiency including deterioration of life performance hardly occurs.

None of the abovementioned elements, which may be used as the element M, undergoes a redox reaction at the charge/discharge potential of a battery using a niobium-titanium composite oxide as an active material. Therefore, these elements M can be used favorably because they do not impair the flatness of the electrode potential of the battery.

Further, by using an element lighter than Nb as the element M, the weight of the active material is reduced, and thereby, an energy density per unit weight can be improved.

The element M may be, for example, an additive element for improving the sintering properties of the niobium-titanium composite oxide.

Cu and the element M may substitute a portion of Nb in a crystal lattice of the niobium-titanium composite oxide, and thereby exist in a state of being solid-solubilized within the crystal lattice. Alternatively, the Cu and the element M may not exist uniformly in the crystal lattice but may exist in a state of being segregated in-between particles of the niobium-titanium composite oxide or in a state of being segregated within a domain of an active material particle. Further alternatively, Cu and the element M may exist in both a state of being solid-solubilized in crystal and a segregated state. In any state, the life performance of the niobium-titanium composite oxide can be improved when Cu and the element M exists together in the active material.

In a more preferred example, the Cu element exists as CuO or $Cu_2O$ on at least a portion of a surface of the niobium-titanium composite oxide. Since CuO and $Cu_2O$ reduce reaction activity of the surface of the niobium-titanium composite oxide, an effect of suppressing a decomposition reaction between the active material and an electrolyte may be obtained. CuO and $Cu_2O$ existing on the particle surface may be composed of the Cu element that is solid-solubilized in the crystal lattice of the niobium-titanium composite oxide and simultaneously located on the particle surface and, among O elements in the crystal lattice, the O element located around such a Cu element. Alternatively, CuO and $Cu_2O$ may be a phase, which is not contained in the crystal lattice of the niobium-titanium composite oxide, but instead covers at least a portion of the particle surface.

In a more preferred example of the active material according to the approach, the niobium-titanium composite oxide is a copper-containing niobium-titanium composite oxide represented by $Li_xTiNb_{2-(y+z)}Cu_yM_zO_{7+\delta}$. In the above formula, $0 \leq x \leq 5$, $1\times10^{-4} \leq y \leq 0.5$, $0 < z \leq 0.6$, and $-0.05 \leq \delta \leq 0.05$. In the above formula, M signifies the at least one element M selected from the group consisting of Na, K, Si, S, Sn, P, Ta, Mo, Mn, Co, Ni and Fe.

The composite oxide represented by the formula $Li_xTiNb_{2-(y+z)}Cu_yM_zO_{7\pm\delta}$ has a Ti cation, which may be reduced from tetravalent to trivalent per chemical formula, and has 2-(y+z) Nb cations, which may be reduced from pentavalent to trivalent. Theoretically, a maximum of 5-2(y+z) lithium ions may be inserted into the composite oxide. Thus, a more preferable range of the subscript x in the above chemical formula is 0 or more and 5-2(y+z) or less.

In the case where all of Cu and the element M contained in the active material exist in a state of being solid-solubilized in the crystal lattice, for example, by substituting Nb in the crystal lattice of the niobium-titanium composite oxide, the value of the subscript y in the above formula is equal to the molar ratio (Cu/Ti), and the subscript z is equal to the molar ratio (M/Ti). That is, the respective maximum values are y = 0.5 and z = 0.6. On the other hand, when Cu and the element M contained in the active material do not uniformly exist in the crystal lattice but are segregated, regardless of the values of the molar ratio (Cu/Ti) and the molar ratio (M/Ti), y = 0 and z = 0.

$\delta$ varies depending on the reduction state of a monoclinic niobium-titanium composite oxide. When $\delta$ is less than -0.05, niobium is reduced in advance, and reactivity with an electrolytic solution is enhanced, so that the cycle life performance is lowered. On the other hand, up until $\delta$ = 0.05 is within the range of measurement error.

The composite oxide represented by the formula $Li_xTiNb_{2-(y+z)}Cu_yM_zO_{7+\delta}$ ($0 \leq x \leq 5$, $1\times10^{-4} \leq y \leq 0.5$, $0 < z \leq 0.6$, $-0.05 \leq \delta \leq 0.05$) is preferable because capacity is not substantially reduced even if a portion of niobium is substituted by Cu and M, and its electron conductivity may be expected to be improved due to substitution with a dopant.

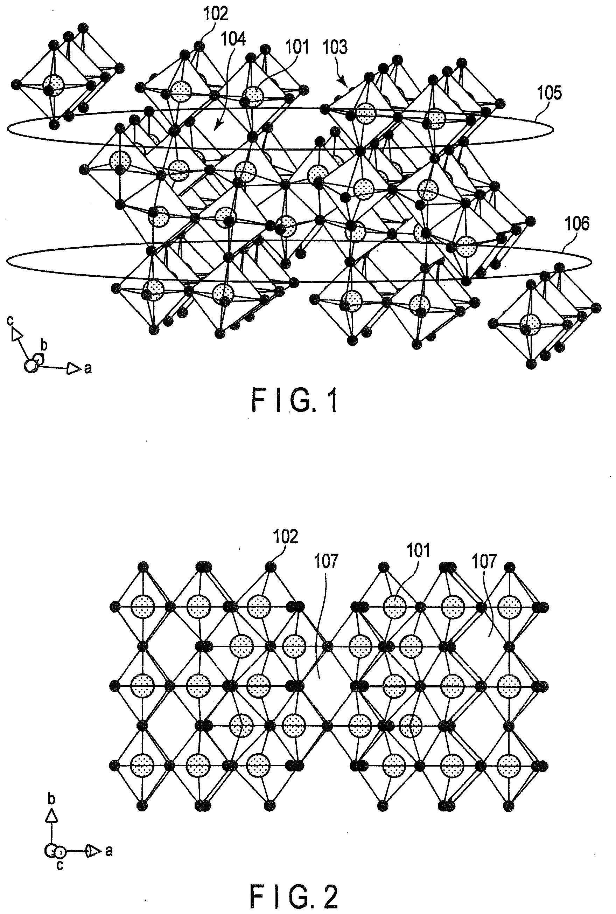

The niobium-titanium composite oxide mainly has a monoclinic crystal structure. As an example, schematic diagrams of the crystal structure of monoclinic $TiNb_2O_7$ are shown in FIG. 1 and FIG. 2.

As shown in FIG. 1, in the crystal structure of monoclinic $TiNb_2O_7$, a metal ion 101 and an oxide ion 102 form a framework structure section 103. As the metal ion 101, Nb ions and Ti ions are arranged at random in the following ratio; Nb : Ti = 2 : 1. Such framework structures 103 are alternately arranged three-dimensionally, thereby vacancies 104 are formed among the framework structure 103. These vacancies 104 serve as hosts for lithium ions.

Regions 105 and 106 are sections having two-dimensional channels in [100] and [010] directions. As shown in FIG. 2, the crystal structure of monoclinic $TiNb_2O_7$ has a vacancy 107 along a [001] direction. This vacancy 107 has a tunnel structure and serves as an electrically conductive path in a [001] direction connecting region 105 and region 106. This electrically conductive path makes it possible for the lithium ions to migrate between regions 105 and 106.

Thus, the structure of the monoclinic crystal has large equivalent insertion spaces for lithium ions and is structurally stable. Furthermore, due to presence of the regions each having a two-dimensional channel where diffusion of lithium ions is rapid, and the electrically conductive path in the [001] direction connecting these regions, there is improved insertion/extraction of lithium ions into and out from the insertion space, along with substantial increase of the insertion/extraction space for lithium ions. Thus, it is possible to provide a high capacity and a high rate performance.

The crystal structure of the niobium-titanium composite oxide included in the active material according to the approach may include as the main phase, the crystal structure (monoclinic) of niobium titanate. The niobium-titanium composite oxide included in the active material of the approach preferably has, though is not limited to, a crystal structure having a space group C2/m symmetry and an atomic coordination described in Journal of Solid-State Chemistry 53, pp. 144-147 (1984).

When a lithium ion is inserted into a vacancy 104, a metal ion 101, which structure the framework, is reduced to a valence of three, thereby maintaining electric neutrality of a crystal. In the niobium-titanium composite oxide according to the approach, not only is a Ti ion reduced from tetravalent to trivalent, but also an Nb ion is reduced from pentavalent to trivalent. Therefore, the number of reduced valences per active material weight is large. Therefore, the niobium-titanium composite oxide can maintain electric neutrality of the crystal even if many lithium ions are inserted. Thus, energy density is higher in the niobium-titanium composite oxide as compared to that in a compound such as titanium oxide only containing a tetravalent cation. For example, the theoretical capacity of a niobium-titanium composite oxide represented by $TiNb_2O_7$ is about 387 mAh/g, which is a value that is twice or more relative to that of a titanium oxide having a spinel structure.

Further, the niobium-titanium composite oxide has a lithium insertion potential of about 1.5 V (vs. $Li/Li^+$). Therefore, by using the active material including the composite oxide, there can be provided a battery capable of stable repeated rapid charge/discharge.

As described above, by using the active material including the niobium-titanium composite oxide, there can be provided a battery active material having excellent rapid charge/discharge performance and a high energy density.

The composite oxide contained in the active material according to the first approach may take the form of particles, for example. An average particle diameter of the composite oxide contained in the active material according to the first approach is not particularly limited and may be changed according to desired battery performance.

A carbon material may be provided on at least a portion of the particle surface of the niobium-titanium composite oxide contained in the active material. For example, by covering at least some portion of powder particles of the niobium-titanium composite oxide with the carbon material, the electro-conductivity of the active material may be improved. As a result of the carbon coating, the powder specific resistance of the active material may be $5\times10^1$ Ω·cm or less.

The active material according to the first approach contains Cu, whereby the reduction of the surface of the composite oxide during carbonization treatment is suppressed. Consequently, the electro-conductivity of the carbon material may be increased. In addition, since the crystal lattice is stabilized by suppressing oxygen deficiency in the composite oxide due to the carbonization treatment, the cycle life may be improved.

The amount of the carbon material provided on the particle surface of the niobium-titanium composite oxide is preferably 0.1% by weight or more and 5% by weight or less in terms of weight ratio (a total weight of the carbon material and the niobium-titanium composite oxide particles is 100% by weight). A more preferable range of the weight ratio is 0.2% by weight or more and 3% by weight or less.

The average secondary particle diameter of the niobium-titanium composite oxide powder provided with the carbon material on at least a portion of its surface is preferably 1 μm or more and 20 μm or less in order to increase the electrode density.

<BET Specific Surface Area>

The BET specific surface area of the niobium-titanium composite oxide according to the first approach is preferably 0.1 $m^2/g$ or more and less than 100 $m^2/g$, though no particular limitation is imposed.

When the specific surface area is 0.1 $m^2/g$ or more, the contact area between the active material and the electrolyte can be secured. Thus, good discharge rate performances are easily obtained. Also, a charge time can be shortened. When the BET specific surface area is less than 100 $m^2/g$, reactivity between the active material and the electrolytic solution does not become too high, and therefore, the life performances can be improved. Further, in this case, applicability becomes favorable for a slurry including the active material, which is used in the later-described production of an electrode.

Here, as the measurement of the specific surface area, a method is used where molecules, in which an occupied area in adsorption is known, are adsorbed onto the surface of powder particles at the temperature of liquid nitrogen, and the specific surface area of the sample is determined from the amount of adsorbed molecules. The most often used method is a BET method based on the low temperature/low humidity physical adsorption of an inert gas. This BET method is a method based on the BET theory, which is the most well-known theory of the method of calculating the specific surface area in which the Langmuir theory, which is a monolayer adsorption theory, is extended to multilayer adsorption. The specific surface area determined by the above method is referred to as "BET specific surface area".

<Manufacturing Method>

The active material according to the approach may be produced by the following method, for example.

First, starting materials are mixed. As the starting materials for the niobium-titanium composite oxide, oxides or salts containing Li, Ti, and Nb is used. As the starting material (M source) for the element M, an oxide or salt containing at least one element selected from the group consisting of Na, K, Si, S, Sn, P, Ta, Mo, Mn, Co, Ni and Fe is used. The salt used as the starting material is preferably a salt that decomposes at relatively low temperature to produce oxide, like carbonates and nitrates. On the other hand, as the starting material for the Cu element, an oxide or salt containing Cu is used. Specifically, for example, CuO, $CuCl_2$, $CuSO_4$, or the like may be used as the starting material for the Cu element.

The starting materials are mixed at such a proportion that the molar ratio (Cu/Ti) is $1 \times 10^{-4} \leq Cu/Ti \leq 0.5$ and the molar ratio (M/Ti) is $0 < M/Ti \leq 0.6$. They are preferably blended in such a molar ratio that the entire charge is maintained neutral in the crystal in which a part of Nb is substituted by the element M. This ensures that a crystal which maintains the crystal structure represented by the formula $Li_xTiNb_2O_7$ is obtained. Even in a method of adding Cu or M in such a manner that all charge is not kept neutral, a crystal which maintains the crystal structure of $Li_xTiNb_2O_7$ in a large part thereof may be obtained by adjusting the amount of Cu or M. The mixing method is not particularly limited, and it is preferable to use wet mixing using a ball mill or a bead mill in which a solvent is added. Examples of the solvent used for wet mixing include ethanol, water, and isopropyl alcohol.

Then, the resultant mixture is ground to obtain a mixture which is as homogeneous as possible. Subsequently, the resultant mixture is fired. The firing is carried out in a temperature range of 500°C or more and 1200°C or less for a total of 10 hours or more and 40 hours or less, dividing into plural times of firing. The plural times of firing includes pre-firing and main firing. Since the addition of the element M has an effect of lowering the melting point, it is possible to obtain a composite oxide having high crystallinity even at a temperature of 1200°C or less. It is more preferable that the firing is carried out in a temperature range of 800°C or more and 1100°C or less. If the firing temperature is 1000°C or less, conventional equipment may be used.

The method described above makes it possible to obtain a copper-containing niobium-titanium composite oxide represented by the formula $Li_xTiNb_{2-(y+z)}Cu_yM_zO_{7+\delta}$ ($0 \leq x \leq 5$, $1 \times 10^{-4} \leq y \leq 0.5$, $0 < z \leq 0.6$, $-0.05 \leq \delta \leq 0.05$). The resultant synthesized product may be, for example, a solid solution of niobium-titanium composite oxide containing Cu and M.

Alternatively, Cu and M may be externally added after a monoclinic niobium-titanium composite oxide (for example, $TiNb_2O_7$) not containing the Cu element and the M element is synthesized in advance.

Specifically, first, the niobium-titanium composite oxide is synthesized without adding Cu and M as follows.

As the starting materials, oxides or salts containing Li, Ti, and Nb is used. The salt used as the starting material is preferably a salt that decomposes at relatively low temperature to produce oxide, like carbonates and nitrates. The starting materials are mixed at an appropriate ratio according to the composition formula of the intended niobium-titanium composite oxide to obtain a raw material mixture. The mixing method is not particularly limited, and it is preferable to conduct wet mixing using a ball mill or a bead mill in which ethanol, water, isopropyl alcohol or the like is used as a solvent.

Then, the resultant mixture is ground to obtain a mixture which is as homogeneous as possible. Subsequently, the resultant mixture is fired. The firing is carried out in a temperature range of 500°C or more and 1200°C or less for a total of 10 hours or more and 40 hours or less, dividing into plural times of firing. The plural times of firing includes pre-firing and main firing. It is more preferable that the firing is carried out in a temperature range of 800°C or more and 1100°C or less.

Subsequently, raw materials for external addition are mixed with the niobium-titanium composite oxide synthesized as described above so as to obtain an intended molar ratio. More specifically, oxides and chlorides serving as supply sources of the Cu element and the M element are added and mixed at such a proportion that the molar ratio (Cu/Ti) is $1 \times 10^{-4} \leq Cu/Ti \leq 0.5$ and the molar ratio (M/Ti) is $0 < M/Ti \leq 0.6$. The mixing method at this time is not particularly limited, and it is preferable to conduct wet mixing using a ball mill or a bead mill in which ethanol, water, or isopropyl alcohol is used as a solvent.

Then, the mixture thus obtained is heated at a temperature of 1000°C or more and 1200°C or less for 1 hour or more and 6 hours or less. As a result, an oxide of an additive element can be produced near the grain boundary of a monoclinic niobium-titanium composite oxide. During heating, the externally added M element exerts a flux effect, and the melting point of the monoclinic niobium-titanium composite oxide is lowered. Thus, it is possible to obtain a composite oxide having high crystallinity even at a temperature of 1200°C or less.

Into the niobium-titanium composite oxide synthesized by the above-described method, lithium ions may be inserted by charging a battery. Alternatively, the niobium-titanium composite oxide may be synthesized as a composited oxide including lithium, by using a compound containing lithium such as lithium carbonate as a starting material.

In order to provide a carbon material on at least a portion of a particle surface of a powder of the synthesized niobium-titanium composite oxide, the following method may be used.

A prescribed amount of a precursor of the carbon material is added (weight ratio is 10% or less) to an oxide powder containing the obtained monoclinic niobium-titanium composite oxide, ethanol is added thereto, and the resultant mixture is mixed homogeneously with a ball mill or the like. Thereafter, heat treatment is performed in an inert atmosphere (for example, a nitrogen or argon atmosphere) at 600°C or more and 1000°C or less, to obtain a powder in which at least a portion of the powder surface of the niobium-titanium composite oxide is coated. After the heat treatment, in order to adjust the secondary particle diameter of the obtained powder, it is preferable to perform grinding again.

When the heat treatment temperature is lower than the above range, resistance in the active material increases, while reactivity between the active material and the electrolyte increases, and thus, the cycle life performance is lowered. When the heat treatment temperature exceeds the above range, the reduction reaction of the surface of the niobium-titanium composite oxide particles due to the carbon material is promoted, so that the electrode capacity decreases.

Examples of the precursor of the carbon material include pitches, resins, acids, alcohols, saccharides, phenols, and celluloses. Among them, it is preferable to use as the carbon material precursor carboxymethyl cellulose (CMC), sucrose, polyvinyl alcohol (PVA) or the like which is carbonized at a lower heat treatment temperature.

On the other hand, instead of the method of coating with the carbon material precursor, it is also possible to vaporize the carbon material precursor, deposit the vaporized carbon material precursor on the surface of the particle, and then apply heat treatment.

<Method of Measuring Active Material>

Next, a method for obtaining the X-ray diffraction profile of the active material according to the powder X-ray diffraction method and the synchrotron X-ray diffraction method, a method for examining the composition of the active material, and a method of examining whether or not a carbon material (e.g., a carbon coating layer) is present will be described.

When a target active material to be measured is included in an electrode material of a secondary battery, a pre-treatment is performed as described below.

First, in order to comprehend the crystal structure of the active material, a state close to the state in which lithium ions are completely extracted from the niobium-titanium composite oxide is achieved. For example, when the target active material to be measured is included in a negative electrode, the battery is brought into a completely discharged state. For example, the discharged state of the battery can be achieved by repeating several times a discharging of the battery in a 25°C environment at 0.1 C current to a rated end voltage, or repeating several times a discharging to a battery voltage of 1.0 V, making the current value during discharge be 1/100 or lower than the rated capacity. Although a slight amount of residual lithium ions may exist even in the discharged state, this does not significantly affect results of X-ray diffraction measurement (powder X-ray diffraction measurement, and synchrotron X-ray diffraction measurement) described below.

Next, the battery is disassembled in a dry atmosphere, such as that in a glove box filled with argon, and the electrode is taken out. The taken-out electrode is washed with an appropriate solvent and dried under reduced pressure. For example, ethyl methyl carbonate may be used for washing. After washing and drying, whether or not there are white precipitates such as a lithium salt on the surface is examined.

The washed electrode is processed or treated into a measurement sample as appropriate, depending on the measurement method to be subjected to. For example, in the case of subjecting to the powder X-ray diffraction measurement, the washed electrode is cut into a size having the same area as that of a holder of the powder X-ray diffraction apparatus, and used as a measurement sample.

When necessary, the active material is extracted from the electrode to be used as a measurement sample. For example, in the case of subjecting to a composition analysis, or in the case of measuring the amount of carbon material, the active material is taken out from the washed electrode, and the taken-out active material is analyzed, as described later.

(Powder X-Ray Diffraction Measurement)

The crystal structure of the niobium-titanium composite oxide included in the active material can be examined by powder X-Ray Diffraction (XRD).

The powder X-ray diffraction measurement of the active material is performed as follows.

First, the target sample is ground until an average particle size reaches about 10 μm. Even if the original average particle size is less than 10 μm, it is preferable that the sample is subjected to a grinding treatment with a mortar, or the like, in order to grind apart aggregates. Grinding to an average particle size of about 5 μm is more preferable. The average particle size can be obtained by laser diffraction, for example.

The ground sample is filled in a holder part having a depth of 0.2 mm, formed on a glass sample plate. As the glass sample plate, for example, a glass sample plate manufactured by Rigaku Corporation is used. At this time, care should be taken to fill the holder part sufficiently with the sample. Precaution should be taken to avoid cracking and formation of voids caused by insufficient filling of the sample. Then, another glass plate is used to smoothen the surface of the sample by sufficiently pressing the glass plate against the sample. In this case, precaution should be taken to avoid too much or too little a filling amount, so as to prevent any rises and dents in the basic plane of the glass holder.

Next, the glass plate filled with the sample is set in a powder X-ray diffractometer, and a diffraction pattern (XRD pattern; X-Ray Diffraction pattern) is obtained using Cu-K$\alpha$ rays.

When the target active material to be measured is included in the electrode material of a secondary battery, first, measurement sample is prepared according to the previously described procedure. The obtained measurement sample is affixed directly to the glass holder, and measured.

Upon which, the position of the peak originating from the electrode substrate such as a metal foil is measured in advance. The peaks of other components such as an electro-conductive agent and a binder are also measured in advance. In such a case that the peaks of the substrate and active material overlap with each other, it is desirable that the layer including the active material (e.g., the later-described active material-containing layer) is separated from the substrate, and subjected to measurement. This is in order to separate the overlapping peaks when quantitatively measuring the peak intensity. For example, the active material-containing layer can be separated by irradiating the electrode substrate with an ultrasonic wave in a solvent.

In the case where there is high degree of orientation in the sample, there is the possibility of deviation of peak position and variation in an intensity ratio, depending on how the sample is filled. For example, in some cases, there may be observed from the results of the later-described Rietveld analysis, an orientation in which crystal planes had become arranged in a specific direction when packing the sample, depending on the shapes of particles. Alternatively, in some cases, influence due to orientation can be seen from measuring of a measurement sample that had been obtained by taking out from a battery.

Such a sample having a high orientation is measured in the form of pellets. The pellet may be a pressed powder having a diameter of 10 mm and a thickness of 2 mm, for example. The pressed powder may be produced by applying a pressure of about 250 MPa to the sample for 15 minutes. The obtained pellet is mounted on an X-ray diffractometer to measure the surface of the pellet. The measurement using such a method can exclude the difference in measuring result between operators to thereby improve reproducibility.

When an intensity ratio measured by this method is different from an intensity ratio measured using the flat plate holder or glass holder described above, the influence due to the orientation is considerable, such that measurement results using the pellets are adopted.

As an apparatus for powder X-ray diffraction measurement, SmartLab manufactured by Rigaku is used, for example. Measurement is performed under the following condition:

X-ray source: Cu target
Output: 45 kV, 200 mA
soller slit: 5 degrees in both incident light and received light
step width ($2\theta$): 0.02 deg
scan speed: 20 deg/min
semiconductor detector: D/teX Ultra 250
sample plate holder: flat glass sample plate holder (0.5 mm thick)
measurement range: $5° \leq 2\theta \leq 90°$

When another apparatus is used, in order to obtain measurement results equivalent to those described above, measurement using a standard Si powder for powder X-ray diffraction is performed, and measurement is conducted with conditions adjusted such that a peak intensity and a peak top position correspond to those obtained using the above apparatus.

Conditions of the above powder X-ray diffraction measurement is set, such that an XRD pattern applicable to Rietveld analysis is obtained. In order to collect data for Rietveld analysis, specifically, the measurement time or X-ray intensity is appropriately adjusted in such a manner that the step width is made 1/3 to 1/5 of the minimum half width of the diffraction peaks, and the intensity at the peak position of strongest reflected intensity is 5,000 cps or more.

(Synchrotron X-Ray Diffraction Measurement)

In order to investigate an oxygen deficiency state in the niobium-titanium composite oxide, it is preferable to carry out synchrotron X-ray diffraction measurement, which has a more powerful X-ray source, in addition to powder X-ray diffraction measurement. In particular, in the case of measuring a niobium-titanium composite oxide in which a carbon material exists on at least a portion of its surface due to carbon coating or the like, when only the powder X-ray diffraction measurement is carried out, the background (for example, noise originating from carbon) becomes high, so that measurement accuracy is lowered. In such a case, an S/N (signal/noise) ratio may be improved using the synchrotron X-ray diffraction measurement.

The synchrotron X-ray diffraction measurement is preferably carried out using a capillary formed of Lindemann glass (columnar glass capillary). Specifically, a sample is inserted into a capillary formed of Lindemann glass, and this capillary is mounted on a rotary sample stage and measured while rotating. Results with reduction in the orientation of the niobium-titanium composite oxide particles may be obtained by such a measuring method.

As an apparatus for synchrotron X-ray diffraction measurement, for example, BL02B2 owned by RIKEN, Japan and located at the public facility SPring-8 under the jurisdiction of the Ministry of Education, Culture, Sports, Science and Technology (MEXT) is used. Measurement conditions are as follows:
a large Debye-Scherrer camera is used,

> Detector: an Imaging-Plate (IP) capable of capturing a scattering angle 2θ up to a high-angle diffraction ray,
> Wavelength used for measurement: 0.6999 Å,
> Measurement temperature: room temperature,
> Sample holder: influence given to diffraction rays due to selective orientation of powder particles and coarse particles are minimized by rotating a glass capillary during measurement,
> Integration time: although depending on an IP saturation time, it should be at least 5 minutes or more,

Method of obtaining diffraction pattern: after the measurement is finished, the intensity and position of the diffraction rays recorded in the IP are read, and two-dimensional diffraction pattern data of the diffraction ray position and the diffraction ray intensity are obtained (2θ/intensity data).

(Examination of Crystal Structure and Oxygen Deficiency State)

The measurement data obtained by the powder X-ray diffraction or synchrotron X-ray diffraction described above is analyzed by the Rietveld method. In the Rietveld method, the parameters of the crystal structure (lattice constant, atomic coordinate, crystal site occupancy ratio, or the like) can be refined by full fitting between measured values and a diffraction pattern calculated from a crystal structure model that has been previously estimated. Thereby, the characteristics of the crystal structure of the measurement sample can be determined.

At this time, the oxygen deficiency state (δ) may be investigated by performing refinement of an occupation ratio of oxide ions from synchrotron X-ray diffraction data. In order to more quantitatively determine the amount of oxygen deficiency, it is preferable to perform investigation using Raman spectroscopy in combination. Raman spectroscopy has sensitive measurement sensitivity to deficiencies localized in a crystal lattice. From an obtained Raman peak, attention is paid to a mode constituted only of oxygen oscillation, and a relationship between the amount of oxygen deficiency and a peak shift amount is examined, whereby the amount of oxygen deficiency may be quantified.

In addition, the amount of deficiency may be directly investigated using equilibrium measurement using an atmosphere controlled high temperature microweb balance.

<Examination of Composition in the Active material>

The composition of the composite oxide in the active material can be analyzed using Inductively Coupled Plasma (ICP) emission spectrometry, for example. In this case, the abundance ratios (molar ratio) of elements depend on the sensitivity of the analyzing device used. Therefore, when the composition of the composite oxide included in an example of the active material according to the first approach is analyzed using ICP emission spectrometry, for example, the numerical values may deviate from the previously described molar ratios due to errors of the measuring device. However, even if the measurement results deviate as described above within the error range of the analyzing device, the example of the active material according to the first approach can sufficiently exhibit the previously described effects.

In order to measure the composition of the active material assembled into a battery according to ICP emission spectrometry, the following procedure is specifically performed.

First, according to the previously described procedure, an electrode including the target active material to be measured is taken out from a secondary battery, and washed. From the washed electrode, the portion including the active material, such as the active material-containing layer, is removed. For example, the portion including the active material can be removed by irradiating with an ultrasonic wave. As a specific example, an electrode is put into ethyl methyl carbonate in a glass beaker, the glass beaker is vibrated in an ultrasonic washing machine, and thereby an active material-containing layer including the electrode active material can be separated from a current collector, for example.

Next, the removed portion is heated for a short time (e.g., about 1 hour at 500°C) in air to thereby sinter away unnecessary components such as binder components and carbon. By dissolving the residue in an acid, a liquid sample including the active material can be prepared. Here, hydrochloric acid, nitric acid, sulfuric acid, hydrogen fluoride, and the like may be used as the acid. The components in the active material can be found by subjecting the liquid sample to ICP analysis.

In addition, the molar ratios (Cu/Ti), (M/Ti) and (Nb/Ti) may be calculated by ICP analysis. Since an element molar ratio in the composite oxide is not changed by heating, the molar ratio may be measured.

(Examination of States of Cu and Element M)

Whether or not Cu and the added element M in the active material are in a state of being solid-solubilized in the crystal lattice of the niobium-titanium composite oxide may be judged as follows. A distribution state of an additive element can be known by transmission electron microscopy (TEM) observation and electron probe microanalysis (EPMA) measurement. It is thereby determined whether Cu and the additive element M are uniformly distributed in a solid or segregated. In this method, it is possible to judge even when the addition amount is a trace amount.

(Examination of Presence or Absence of Carbon Material on Particle Surface)

Whether or not the carbon material is provided on the particle surface of the niobium-titanium composite oxide may be examined as follows.

First, according to the procedure described above, an electrode containing the active material to be measured is taken out from a secondary battery and washed.

An active material powder is taken out from the washed electrode. The active material powder may be taken out as follows, for example. First, an electrode containing a binder is dispersed in a solvent. As the solvent to be used in this case, for example, N-methylpyrrolidone is used if the binder is an organic solvent binder, and pure water is used if the binder is an aqueous binder (for example, a water-soluble binder). The solvent is irradiated with ultrasonic waves for 30 minutes or more to disperse the electrode. As a result, the binder becomes dissolved, and an electrode material may be separated as a powder from a current collector. Then, a solvent containing the powder of the electrode material is placed in a centrifuge, separated into an electro-conductive agent and active material particles, and then recovered by freeze drying. Thus, the active material powder may be taken out while maintaining the carbon material provided on the particle surface.

The taken out active material is washed with an organic solvent such as a diethyl carbonate solvent to dissolve and remove a lithium salt and then dried. After drying, the active material, which has been thoroughly washed with water in air to remove residual lithium ions, is used as a measurement subject.

The carbon material on the particle surface may be analyzed by the following inorganic element analysis. An active material sample prepared as a measurement target is placed in an alumina crucible together with a combustion improver and burned by high frequency induction heating in an oxygen stream. At this time, since carbon is released as carbon dioxide, a carbon content is quantified by detecting carbon dioxide with an infrared detector. As a measuring apparatus, for example, a Model No. CS 844 manufactured by Leco Corporation may be used.

(Measurement of Powder Specific Resistance)

The powder specific resistance of the active material may be measured, for example, as follows. For preparing an active material sample used for the measurement, it is possible to use a procedure similar to the method of preparing a measurement sample when examining for the carbon material on the particle surface.

As a measuring apparatus, for example, a powder resistance measuring system MCP-PD51 type manufactured by Mitsubishi Chemical Analytech Co., Ltd. may be used. 3 g of the active material sample is placed in a counter-electrode cylinder with an electrode radius of 10 mm, and the volume resistivity is measured under a pressure of 20 kg·N. The electric resistance is measured with an applied voltage set at 10 V, and the specific resistance (Ωcm) of a powder is calculated from electrode thickness and diameter.

As described hereinabove, according to the first approach, it is possible to provide an active material which exhibits high energy density and has excellent rapid charge/discharge performance and long life performance. This active material can achieve a long-life secondary battery having high capacity and excellent rapid charge/discharge performance.

[Second Approach]

According to the second approach, an electrode is provided.

The electrode according to the second approach contains the active material according to the first approach. This electrode may be a battery electrode containing the active material according to the first approach as an active material for a battery. The electrode as a battery electrode may be, for example, a negative electrode containing the active material according to the first approach as a negative electrode active material.

The electrode according to the second approach may include a current collector and an active material-containing layer. The active material-containing layer may be formed on both of reverse surfaces or one surface of the current collector. The active material-containing layer may contain the active material, and optionally an electro-conductive agent and a binder.

The active material-containing layer may singly include the active material according to the first approach or include two or more kinds of the active material according to the first approach. Furthermore, a mixture where one kind or two or more kinds of the active material according to the first approach is further mixed with one kind or two or more kinds of another active material may also be included.

For example, in a case where the active material according to the first approach is included as the negative electrode active material, examples of other active materials include lithium titanate having a ramsdellite structure (e.g., $Li_{2+y}Ti_3O_7$, $0 < y \leq 3$), lithium titanate having a spinel structure (e.g., $Li_{4+x}Ti_5O_{12}$, $0 < x \leq 3$), monoclinic titanium dioxide ($TiO_2$), anatase type titanium dioxide, rutile type titanium dioxide, a hollandite type titanium composite oxide, an orthorhombic titanium composite oxide, and a monoclinic niobium titanium composite oxide.

Examples of the orthorhombic titanium-containing composite oxide include a compound represented by $Li_{2+a}M(I)_{2-b}Ti_{6-c}M(II)_dO_{14+\sigma}$. Here, M(I) is at least one selected from the group consisting of Sr, Ba, Ca, Mg, Na, Cs, Rb and K. M(II) is at least one selected from the group consisting of Zr, Sn, V, Nb, Ta, Mo, W, Y, Fe, Co, Cr, Mn, Ni and Al. The respective subscripts in the composition formula are specified as follows: $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$) .

Examples of the monoclinic niobium titanium composite oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are specified as follows: $0 \leq x \leq 5$, $0 \leq y < 1$, $0 \leq z < 2$, and $-0.3 \leq \delta \leq 0.3$. Specific examples of the monoclinic niobium titanium composite oxide include $Li_xNb_2TiO_7$ ($0 \leq x \leq 5$) .

Another example of the monoclinic niobium titanium composite oxide is a compound represented by $Ti_{1-y}M3_{y+z}Nb_{2-z}O_{7-\delta}$. Here, M3 is at least one selected from Mg, Fe, Ni, Co, W, Ta, and Mo. The respective subscripts in the composition formula are specified as follows: $0 \leq y < 1$, $0 \leq z \leq 2$, and $-0.3 \leq \delta \leq 0.3$.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, and graphite. One of these may be used as the electro-conductive agent, or two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or two or more may be used in combination as the binder.

The blending proportion of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder in the active material-containing layer are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, and excellent cycling performances can be expected. On the other hand, an amount of each of the electro-conductive agent and binder is preferably 30% by mass or less, in view of increasing the capacity.

There may be used for the current collector, a material which is electrochemically stable at the potential (vs. $Li/Li^+$) at which lithium (Li) is inserted into and extracted from active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 $\mu$m to 20 $\mu$m. The current collector having such a thickness can maintain balance between the strength and weight reduction of the electrode.

The current collector may include a portion where the active material-containing layer is not formed on a surface of the current collector. This portion may serve as an electrode tab.

The electrode may be produced by the following method, for example. First, active material, electro-conductive agent, and binder are suspended in a solvent to prepare a slurry. The slurry is applied onto one surface or both of reverse surfaces of a current collector. Next, the applied slurry is dried to form a layered stack of active material-containing layer and current collector. Then, the layered stack is subjected to pressing. The electrode can be produced in this manner.

Alternatively, the electrode may also be produced by the following method. First, active material, electro-conductive agent, and binder are mixed to obtain a mixture. Next, the mixture is formed into pellets. Then the electrode can be obtained by arranging the pellets on the current collector.

The electrode according to the second approach contains the active material according to the first approach. Thus, the electrode according to the second approach can achieve a secondary battery which has a high energy density and simultaneously realizes rapid charge/discharge performance and long life property.

[Third Approach]

According to a third approach, there is provided a secondary battery including a negative electrode, a positive electrode, and an electrolyte. As the negative electrode, the secondary battery includes the electrode according to the second approach. That is, the secondary battery according to the third approach includes as the negative electrode, an electrode that includes the active material according to the first approach as a battery active material.

The secondary battery according to the third approach may further include a separator provided between the positive electrode and the negative electrode. The negative electrode, the positive electrode, and the separator can structure an electrode group. The electrolyte may be held in the electrode group.

The secondary battery according to the third approach may further include a container member that houses the electrode group and the electrolyte.

The secondary battery according to the third approach may further include a negative electrode terminal electrically connected to the negative electrode and a positive electrode terminal electrically connected to the positive electrode.

The secondary battery according to the third approach may be, for example, a lithium secondary battery. The secondary battery also includes nonaqueous electrolyte secondary batteries containing nonaqueous electrolyte(s).

Hereinafter, the negative electrode, the positive electrode, the electrolyte, the separator, the container member, the negative electrode terminal, and the positive electrode terminal will be described in detail.

1) Negative Electrode

The negative electrode may include a negative electrode current collector and a negative electrode active material-containing layer. The negative electrode current collector and the negative electrode active material-containing layer may be respectively a current collector and an active material-containing layer that may be included in the electrode according to the second approach. The negative electrode active material-containing layer contains the active material according to the first approach as a negative electrode active material.

Of the details of the negative electrode, parts overlapping with the details described in the second approach are omitted.

The density of the negative electrode active material-containing layer (excluding the current collector) is preferably from 1.8 g/cm$^3$ to 2.8 g/cm$^3$. The negative electrode, in which the density of the negative electrode active material-containing layer is within this range, is excellent in energy density and ability to hold the electrolyte. The density of the negative electrode active material-containing layer is more preferably from 2.1 g/cm$^3$ to 2.6 g/cm$^3$.

The negative electrode may be produced by a method similar to that for the electrode according to the second approach, for example.

2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one kind of compound as the positive electrode active material, or alternatively, include two or more kinds of compounds in combination. Examples of the oxide and sulfide include compounds capable of having Li and Li ions be inserted and extracted.

Examples of such compounds include manganese dioxides ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y < 1$, and

$Li_xCoPO_4$; $0 < x \leq 1$), iron sulfates [$Fe_2(SO_4)_3$], vanadium oxides (e.g., $V_2O_5$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When a room temperature molten salt is used as the electrolyte of the battery, it is preferable to use a positive electrode active material including lithium iron phosphate, $Li_xVPO_4F$ ($0 \leq x \leq 1$), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 μm. The positive electrode active material having a primary particle size of 100 nm or more is easy to handle during industrial production. In the positive electrode active material having a primary particle size of 1 μm or less, diffusion of lithium ions within solid can proceed smoothly.

The specific surface area of the positive electrode active material is preferably from 0.1 $m^2/g$ to 10 $m^2/g$. The positive electrode active material having a specific surface area of 0.1 $m^2/g$ or more can secure sufficient sites for inserting and extracting Li ions. The positive electrode active material having a specific surface area of 10 $m^2/g$ or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, imide compounds, carboxymethyl cellulose (CMC), and salts of CMC. One of these may be used as the binder, or two or more may be used in combination as the binder.

The electro-conductive agent is added to improve current collection performance and to suppress the contact resistance between the positive electrode active material and the positive electrode current collector. Examples of the electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of an electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably from 5 μm to 20 μm, and more preferably 15 μm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface of the positive electrode current collector. This portion may serve as a positive electrode tab.

The positive electrode may be produced by a method similar to that for the electrode according to the second approach, for example, using a positive electrode active material.

3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide [$LiN(CF_3SO_2)_2$], and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); $\gamma$-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because such a porous film melts at a fixed temperature and thus able to shut off current.

5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

6) Negative electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

7) Positive Electrode Terminal

The positive electrode terminal may be made of, for example, a material that is electrically stable in the potential range of 3 V to 4.5 V (vs. $Li/Li^+$) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the third approach will be more specifically described with reference to the drawings.

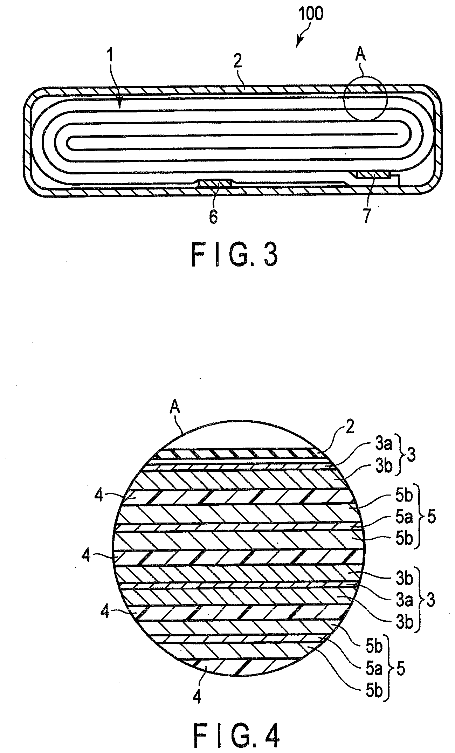

FIG. 3 is a cross-sectional view schematically showing an example of a secondary battery according to the third approach. FIG. 4 is an enlarged cross-sectional view of section A of the secondary battery shown in FIG. 3.

The secondary battery 100 shown in FIGS. 3 and 4 includes a bag-shaped container member 2 shown in FIG. 3, an electrode group 1 shown in FIGS. 3 and 4, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 3, the electrode group 1 is a wound electrode group in a flat form. The wound electrode group 1 in a flat form includes a negative electrode 3, a separator 4, and a positive electrode 5, as shown in FIG. 4. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 4. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 3, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

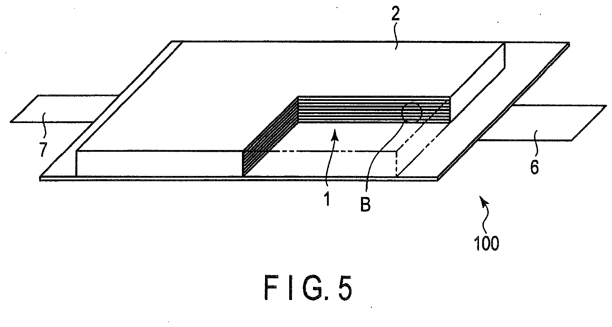

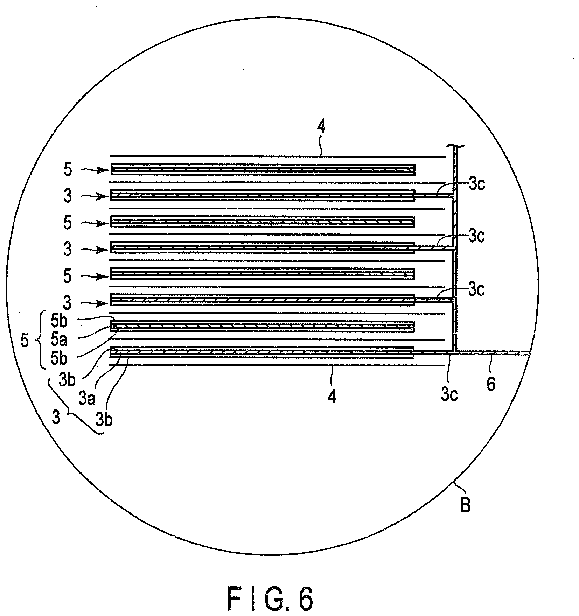

The secondary battery according to the third approach is not limited to the secondary battery of the structure shown in FIGS. 3 and 4, and may be, for example, a battery of a structure as shown in FIGS. 5 and 6.

FIG. 5 is a partially cut-out perspective view schematically showing another example of a secondary battery according to the third approach. FIG. 6 is an enlarged cross-sectional view of section B of the secondary battery shown in FIG. 5.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which and negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion 3c where the negative electrode active material-containing layer 3b is not supported on either surface. This portion 3c serves as a negative electrode tab. As shown in FIG. 6, the portions 3c serving as the negative electrode tabs do not overlap the positive electrodes 5. The plural negative electrode tabs (portions 3c) are electrically connected to the strip-shaped negative electrode terminal 6. A tip of the strip-shaped negative electrode terminal 6 is drawn to the outside from the container member 2.

Although not shown, the positive electrode current collector 5a of each of the positive electrodes 5 includes at one end, a portion where the positive electrode active material-containing layer 5b is not supported on either surface. This portion serves as a positive electrode tab. Like the negative electrode tabs (portion 3c), the positive electrode tabs do not overlap the negative electrodes 3. Further, the positive electrode tabs are located on the opposite side of the electrode group 1 with respect to the negative electrode tabs (portion 3c). The positive electrode tabs are electrically connected to the strip-shaped positive electrode terminal 7. A tip of the strip-shaped positive electrode terminal 7 is located on the opposite side relative to the negative electrode terminal 6 and drawn to the outside from the container member 2.

The secondary battery according to the third approach contains the active material according to the first approach as a negative electrode active material. Thus, the secondary battery according to the third approach has a high energy density and can simultaneously realize rapid charge/discharge performance and long life property.

[Fourth Approach]

According to a fourth approach, a battery module is provided. The battery module according to the fourth approach includes plural secondary batteries according to the third approach.

In the battery module according to the fourth approach, each of the single batteries may be arranged electrically connected in series, in parallel, or in a combination of in-series connection and in-parallel connection.

An example of the battery module according to the fourth approach will be described next with reference to the drawings.

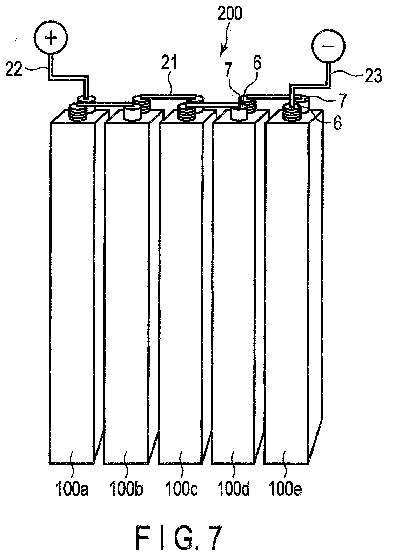

FIG. 7 is a perspective view schematically showing an example of the battery module according to the fourth approach. A battery module 200 shown in FIG. 7 includes five single-batteries 100a to 100e, four bus bars 21, a positive electrode-side lead 22, and a negative electrode-side lead 23. Each of the five single-batteries 100a to 100e is a secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five in-series connection.

As shown in FIG. 7, the positive electrode terminal 7 of the single-battery 100a located at left end among the five single-batteries 100a to 100e is connected to the positive electrode-side lead 22 for external connection. In addition, the negative electrode terminal 6 of the single-battery 100e located at the right end among the five single-batteries 100a to 100e is connected to the negative electrode-side lead 23 for external connection.

The battery module according to the fourth approach includes the secondary battery according to the third approach. Thus, the battery module has a high energy density and can simultaneously realize rapid charge/discharge performance and long life property.

[Fifth Approach]

According to a fifth approach, a battery pack is provided. The battery pack includes a battery module according to the fourth approach. The battery pack may include a single secondary battery according to the third approach, in place of the battery module according to the fourth approach.

The battery pack according to the fifth approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the fifth approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the fifth approach will be described with reference to the drawings.

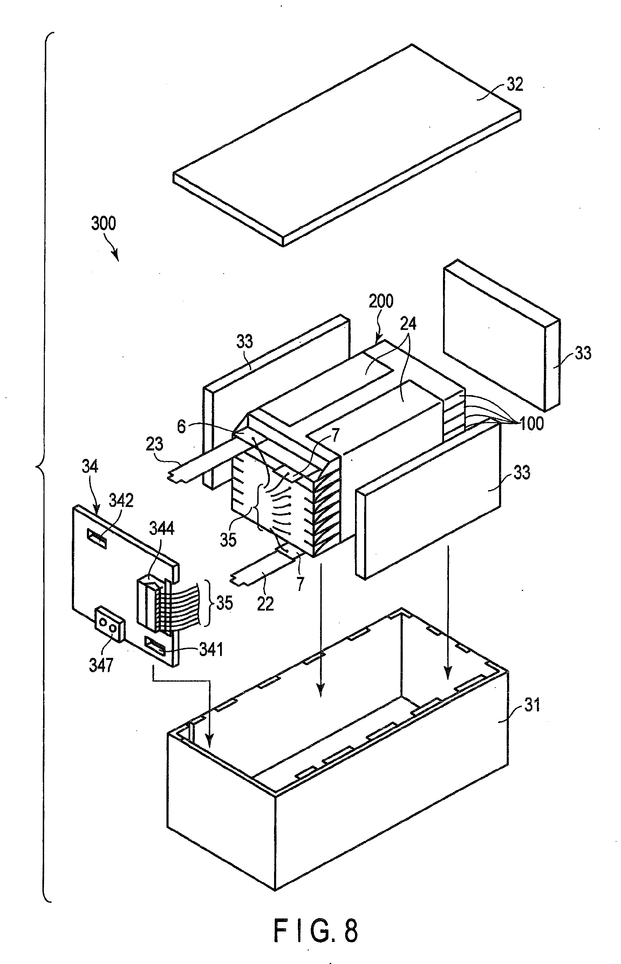

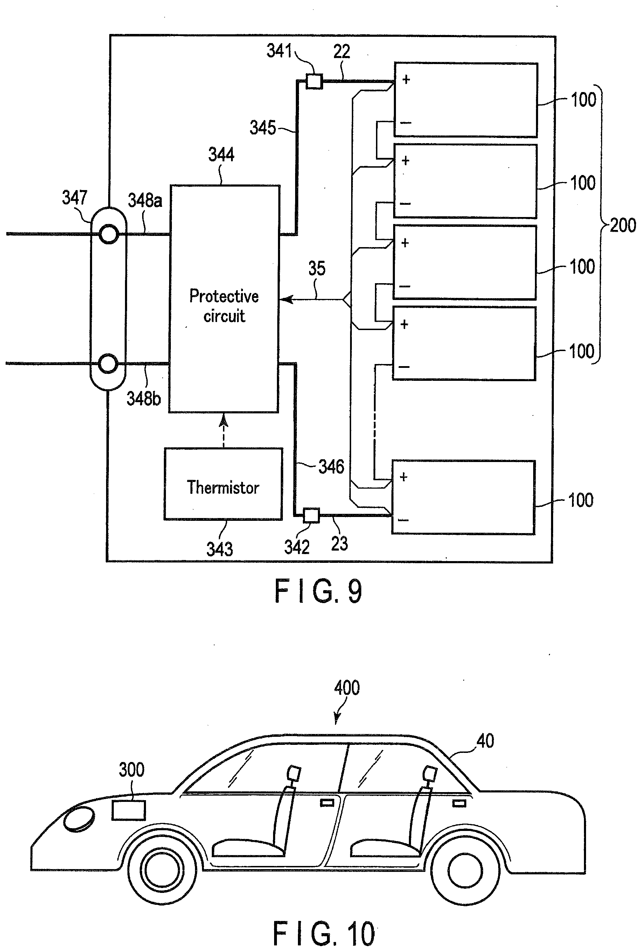

FIG. 8 is an exploded perspective view schematically showing an example of the battery pack according to the fifth approach. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 shown in FIG. 8 is a square bottomed container having a rectangular bottom surface. The housing container 31 is configured to be capable of storing the protection sheets 33, the battery module 200, the printed wiring board 34, and the wires 35. The lid 32 has a rectangular shape. The lid 32 covers the housing container 31 to house the battery module 200 and such. The housing container 31 and the lid 32 are provided with openings, connection terminals, or the like (not shown) for connection to an external device or the like.

The battery module 200 includes plural single-batteries 100, a positive electrode-side lead 22, a negative electrode-side lead 23, and adhesive tape(s) 24.

A single-battery 100 has a structure shown in FIGS. 3 and 4. At least one of the plural single-batteries 100 is a secondary battery according to the second approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape(s) 24 fastens the plural single-batteries 100. The plural single-batteries 100 may be fixed using a heat-shrinkable tape in place of the adhesive tape(s) 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

The printed wiring board 34 is provided along one face in the short-side direction among the inner surfaces of the housing container 31. The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through hole. By inserting the other end of the positive electrode-side lead 22 into the though hole, the positive electrode-side connector 341 and the positive electrode-side lead 22 become electrically connected. The negative electrode-side connector 342 is provided with a through hole. By inserting the other end of the negative electrode-side lead 23 into the though hole, the negative electrode-side connector 342 and the negative electrode-side lead 23 become electrically connected.

The thermistor 343 is fixed to one principal surface of the printed wiring board 34. The thermistor 343 detects the temperature of each single-battery 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective sheets 33 are arranged on both inner surfaces of the housing container 31 along the long-side direction and on the inner surface along the short-side direction facing the printed wiring board 34 across the battery module 200 positioned therebetween. The protective sheets 33 are made of, for example, resin or rubber.

The protective circuit 344 controls charge and discharge of the plural single-batteries 100. The protective circuit 344 is also configured to cut-off electric connection between the protective circuit 344 and the external power distribution terminal 347 to external device(s), based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 include a signal indicating detection of over-charge, over-discharge, and overcurrent of the single-battery (single-batteries) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 344, a circuit included in a device (for example, an electronic device or an automobile) that uses the battery pack 300 as a power source may be used.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

Such a battery pack 300 is used, for example, in applications where excellent cycle performance is demanded when a large current is extracted. More specifically, the battery pack 300 is used as, for example, a power source for electronic devices, a stationary battery, or an onboard battery for various kinds of vehicles. An example of the electronic device is a digital camera. The battery pack 300 is particularly favorably used as an onboard battery.

The battery pack according to the fifth approach is provided with the secondary battery according to the third approach or the battery module according to the fourth approach. Accordingly, the battery pack according to the fifth approach has a high energy density and can simultaneously realize rapid charge/discharge performance and long life property.

[Sixth Approach]

According to a sixth approach, a vehicle is provided. The battery pack according to the fifth approach is installed on this vehicle.

In the vehicle according to the sixth approach, the battery pack is configured, for example, to recover regenerative energy from motive force of the vehicle.

Examples of the vehicle according to the sixth approach include two-wheeled to four-wheeled hybrid electric automobiles, two-wheeled to four-wheeled electric automobiles, electrically assisted bicycles, and railway cars.

In the vehicle according to the sixth approach, the installing position of the battery pack is not particularly limited. For example, the battery pack may be installed in the engine compartment of the vehicle, in rear parts of the vehicle, or under seats.

The vehicle according to the sixth approach may have plural battery packs installed. In such a case, the battery packs may be electrically connected in series, electrically connected in parallel, or electrically connected in a combination of in-series connection and in-parallel connection.

An example of the vehicle according to the sixth approach is explained below, with reference to the drawings.

FIG. 10 is a cross-sectional view schematically showing an example of a vehicle according to the sixth approach.

A vehicle 400, shown in FIG. 10 includes a vehicle body 40 and a battery pack 300 according to the fifth approach. In the example shown in FIG. 10, the vehicle 400 is a four-wheeled automobile.

This vehicle 400 may have plural battery packs 300 installed. In such a case, the battery packs 300 may be connected in series, connected in parallel, or connected in a combination of in-series connection and in-parallel connection.

In FIG. 10, the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

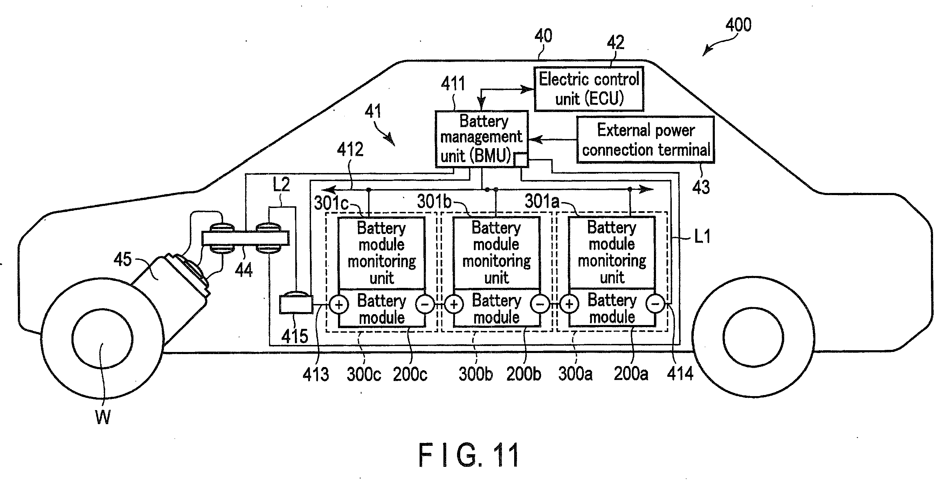

Next, with reference to FIG. 11, an aspect of operation of the vehicle according to the sixth approach is explained.

FIG. 11 is a view schematically showing another example of the vehicle according to the sixth approach. A vehicle 400, shown in FIG. 11, is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit301a (e.g., a VTM: voltage temperature monitoring). The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 11) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Accordingly, a high performance vehicle is provided due to the high energy density and rapid charge/discharge performance of the battery pack. In addition, the reliability of the vehicle is high due to the long life property of the battery pack.

[Examples]

Hereinafter, the above approach will be described in more detail based on examples. For the identification of the crystal phase and estimation of crystal structure of the synthesized niobium-titanium composite oxide and quantification of the amount of the oxygen ion deficiency, microscopic laser Raman measurement and synchrotron radiation X-ray diffraction were used. Further, the composition of the product was analyzed by the ICP method to confirm whether a target product was obtained or not. Furthermore, the state of the element M was analyzed by TEM observation and EPMA measurement.

(Synthesis)

<Examples 1 to 4>

In Examples 1 to 4, after synthesis of $Nb_2TiO_7$, oxides or chlorides serving as external supply sources of the Cu element and the M element were mixed, and heat treatment was performed, whereby a sample in which additive elements were segregated towards the grain boundary was synthesized.
First, as a starting material, a powder obtained by mixing commercially available oxide reagents shown in Table 1 in the indicated raw material molar ratios was charged into a mortar. Ethanol was added to this mortar, and wet mixing was conducted.
Then, the mixture thus obtained was placed in an electric furnace and subjected to heat treatment. First of all, pre-firing was carried out at a temperature of 850°C for 6 hours. Then, the pre-fired powder was taken out from the furnace, reground, and further mixed.
The mixture thus obtained was subsequently fired for the first time at a temperature of 1100°C for 6 hours. After firing, a fired powder was taken out from the furnace and remixed.
Subsequently, the fired powder remixed was placed in a furnace and subjected to second firing at a temperature of 1100°C for 6 hours. After firing, a fired powder was taken out from the furnace and remixed.
Subsequently, the fired powder remixed was placed in a furnace and subjected to third firing at a temperature of 1100°C for 12 hours. At this time, the powder which had finished being fired at 1100°C was quickly taken out from the electric furnace and allowed to cool in air at room temperature.
The powder obtained after the third firing, that is, as a result of firing at a temperature of 1100°C for a total of 24 hours was used as the main phase composition of each of Examples 1 to 4.
Subsequently, appropriate amounts of the supply source of the Cu element and the supply source of the M element as external additive species were added to the obtained main phase composition, and then the mixture was charged into a mortar. In Example 1, CuO (Cu element supply source) in an amount of $1\times10^{-4}$ mol and NaCl (M element supply source) in an amount of 0.1 mol were added per 1 mol of the main phase composition. In Examples 2 to 4, oxides listed in Table 1 as external additive species were added in the molar ratios indicated. Ethanol was added to each mortar, and wet mixing was conducted.
Then, respective powders obtained as a result of heating the mixture thus obtained at a temperature of 1000°C for 1 hour were used as active material powders of Examples 1 to 4.

<Example 5>

An active material which contained copper-containing niobium-titanium composite oxide represented by the formula $Li_xTiNb_{2-(y+z)}Cu_yM_zO_{7+\delta}$ ($0 \le x \le 5$, $1\times10^{-4} \le y \le 0.5$, $0 < z \le 0.6$, $-0.05 \le \delta \le 0.05$) and in which the M element was Mo was synthesized. Synthesis was carried out with the objective of an active material powder in which the subscript x is 0, the subscript y is 0.01, the subscript z is 0.03, and the subscript $\delta$ is 0.
First, as a starting material, a mixed powder was obtained by mixing commercially available oxide reagents shown in Table 1 in the indicated raw material molar ratios. The mixed powder of the starting material was charged into a mortar. Ethanol was added to this mortar, and wet mixing was conducted.
Then, the mixture thus obtained was placed in an electric furnace and subjected to heat treatment as follows.
First of all, pre-firing was carried out at a temperature of 850°C for 6 hours. Then, the pre-fired powder was taken out from the furnace, reground, and further mixed.
The mixture thus obtained was subsequently fired for the first time at a temperature of 1100°C for 6 hours. After firing, a fired powder was taken out from the furnace and remixed.

Subsequently, the fired powder remixed was placed in a furnace and subjected to second firing at a temperature of 1100°C for 6 hours. After firing, a fired powder was taken out from the furnace and remixed.

Subsequently, the fired powder remixed was placed in a furnace and subjected to third firing at a temperature of 1100°C for 12 hours. At this time, the powder which had finished being fired at 1100°C was quickly taken out from the electric furnace and allowed to cool in air at room temperature.

The powder obtained after the third firing, that is, as a result of firing at a temperature of 1100°C for a total of 24 hours was used as the active material powder of Example 5.

<Examples 6 to 7>

Carbon coating treatment was applied to the same active material powder as in Example 5.

First, an active material powder containing a copper-containing niobium-titanium composite oxide in which the M element was Mo was synthesized in the same manner as in Example 5.

Using the obtained active material powder as a precursor, sucrose was added in a weight ratio of 10% to the precursor, and ethanol was added. A mixture containing the precursor was uniformly mixed in a ball mill for 15 minutes. Thereafter, the mixture was subjected to heat treatment under an argon atmosphere. In Example 6, heating was performed at 500°C for 1 hour. In Example 7, heat treatment was performed at 700°C for 1 hour.

The active material powder thus coated with the carbon material was used as the active material powder of each of Examples 6 and 7.

<Examples 8 to 10>

Plural kinds of active materials which contained copper-containing niobium-titanium composite oxide represented by the formula $Li_xTiNb_{2-(y+z)}Cu_yM_zO_{7+\delta}$ ($0 \leq x \leq 5$, $1\times10^{-4} \leq y \leq 0.5$, $0 < z \leq 0.6$, $-0.05 \leq \delta \leq 0.05$) and in which the M element was Mo were synthesized. Each subscript in the composition formula is as shown in Table 3.

The active material powders of Examples 8 to 10 were obtained by carrying out synthesis in the same manner as in Example 5 except that the raw materials as starting materials listed in Table 1 were mixed in the molar ratio indicated.

<Examples 11 to 18>

Active material powders which contained copper-containing niobium-titanium composite oxide represented by the formula $Li_xTiNb_{2-(y+z)}Cu_yM_zO_{7+\delta}$ ($0 \leq x \leq 5$, $1\times10^{-4} \leq y \leq 0.5$, $0 < z \leq 0.6$, $-0.05 \leq \delta \leq 0.05$) and in which the M elements were various elements shown in Table 3 were synthesized. As a specific example, in Example 9, an active material powder containing Mo and Ta as the M elements was synthesized.

The active material powders of Examples 11 to 18 were obtained by carrying out synthesis in the same manner as in Example 5 except that the raw materials as starting materials listed in Table 1 were mixed in the molar ratio indicated.

<Comparative Example 1>

$TiNb_2O_7$ was synthesized according to the method described in Jpn. Pat. Appln. KOKAI Publication No. 2010-287496. Specifically, a titanium oxide powder and a niobium pentoxide powder were weighed in a molar ratio of 1:1 and wet-mixed using ethanol in a mortar. This mixture was put in a platinum crucible and heat-treated according to the method described in Examples of Jpn. Pat. Appln. KOKAI Publication No. 2010-287496. Specifically, heat treatment was performed in an electric furnace at 1000°C for 24 hours in air. After allowing to cool, grinding and mixing were performed again in a mortar, and heat treatment was performed at 1000°C for 24 hours.

<Comparative Example 2>

Carbon coating treatment was applied to the same active material powder as in Comparative Example 1.

First, $TiNb_2O_7$ was synthesized in the same procedure as in Comparative Example 1.

Using the obtained $TiNb_2O_7$ as a precursor, sucrose was added in a weight ratio of 10% to the precursor, and ethanol was added. A mixture containing the precursor was uniformly mixed in a ball mill for 15 minutes. Thereafter, the mixture was subjected to heat treatment at 700°C for 1 hour under an argon atmosphere.

<Comparative Example 3>

$TiNb_{1.9}Mo_{0.075}Mg_{0.025}O_7$ was synthesized according to the method described in Jpn. Pat. Appln. KOKAI Publication No. 2012-199146. Specifically, raw materials as starting materials listed in Table 2 were weighed in the molar ratio indicated and mixed in a mortar. Then, the mixture was placed in an electric furnace and fired at 1000°C for a total of 36 hours.

<Comparative Example 4>

According to the method described in Jpn. Pat. Appln. KOKAI Publication No. 2012-199146, a composite oxide having a crystal structure of $TiNb_2O_7$ and existing in a state in which an element V was solid-solubilized was synthesized.

$Nb_2O_5$, $TiO_2$, and $V_2O_5$ were provided as starting materials. $Nb_2O_5$ and $TiO_2$ were mixed in a molar ratio of 1:1, and $V_2O_5$ was added at a ratio such that the molar ratio (M/Ti) was 0.01. In this synthesis method, the element V may function as a flux.

Table 1 shows the compositions of the starting materials and external additive species used in each example and the molar ratios of raw materials.

[Table 1]

| | M source / amount | Ti source / amount | Nb source / amount | External additive species / amount |
|---|---|---|---|---|
| Example 1 | - | $TiO_2$ / 1.0 | $Nb_2O_5$ / 1.0 | CuO / $1\times10^{-4}$ NaCl / 0.1 |
| Example 2 | - | $TiO_2$ / 1.0 | $Nb_2O_5$ / 1.0 | CuO / 0.01 KCl / 0.3 |
| Example 3 | - | $TiO_2$ / 1.0 | $Nb_2O_5$ / 1.0 | CuO / 0.5 KCl / 0.5 |
| Example 4 | - | $TiO_2$ / 1.0 | $Nb_2O_5$ / 1.0 | CuO / 0.5 $FeS_2$ / 0.1 |
| Example 5 | CuO / 0.01 $MoO_3$ / 0.03 | $TiO_2$ / 1.0 | $Nb_2O_5$ / 0.98 | - |
| Example 6 | CuO / 0.01 $MoO_3$ / 0.03 | $TiO_2$ / 1.0 | $Nb_2O_5$ / 0.98 | - |
| Example 7 | CuO / 0.01 $MoO_3$ / 0.03 | $TiO_2$ / 1.0 | $Nb_2O_5$ / 0.98 | - |
| Example 8 | CuO / 0.05 $MoO_3$ / 0.15 | $TiO_2$ / 1.0 | $Nb_2O_5$ / 0.9 | - |
| Example 9 | CuO / 0.1 $MoO_3$ / 0.3 | $TiO_2$ / 1.0 | $Nb_2O_5$ / 0.8 | - |
| Example 10 | CuO / 0.2 $MoO_3$ / 0.6 | $TiO_2$ / 1.0 | $Nb_2O_5$ / 0.6 | - |
| Example 11 | CuO / 0.01 $MoO_3$ / 0.03 $Ta_2O_5$ / 0.05 | $TiO_2$ / 1.0 | $Nb_2O_5$ / 0.93 | - |
| Example 12 | CuO / 0.1 $MoO_3$ / 0.4 $Mn_2O_3$ / 0.025 | $TiO_2$ / 1.0 | $Nb_2O_5$ / 0.725 | - |
| Example 13 | CuO / 0.1 $MoO_3$ / 0.4 $Co_2O_3$ / 0.025 | $TiO_2$ / 1.0 | $Nb_2O_5$ / 0.725 | - |
| Example 14 | CuO / 0.1 $MoO_3$ / 0.4 $Ni_2O_3$ / 0.025 | $TiO_2$ / 1.0 | $Nb_2O_5$ / 0.725 | - |
| Example 15 | CuO / 0.1 $MoO_3$ / 0.4 $Fe_2O_3$ / 0.025 | $TiO_2$ / 1.0 | $Nb_2O_5$ / 0.725 | - |
| Example 16 | CuO / 0.05 $MoO_3$ / 0.2 $SnO_2$ / 0.05 | $TiO_2$ / 1.0 | $Nb_2O_5$ / 0.85 | - |
| Example 17 | CuO / 0.05 $MoO_3$ / 0.2 $SiO_2$ / 0.05 | $TiO_2$ / 1.0 | $Nb_2O_5$ / 0.85 | - |
| Example 18 | CuO / 0.05 $MoO_3$ / 0.15 $P_2O_5$ / 0.05 | $TiO_2$ / 1.0 | $Nb_2O_5$ / 0.85 | - |

Table 2 shows the compositions of the starting materials and external additive species used in each comparative example and the molar ratios of raw materials.

[Table 2]

| | M source / amount | Ti source / amount | Nb source / amount | External additive species / amount |
|---|---|---|---|---|
| Comparative Example 1 | - | $TiO_2$ / 1.0 | $Nb_2O_5$ / 1.0 | - |
| Comparative Example 2 | - | $TiO_2$ / 1.0 | $Nb_2O_5$ / 1.0 | - |
| Comparative Example 3 | $MoO_3$ / 0.075 MgO / 0.025 | $TiO_2$ / 1.0 | $Nb_2O_5$ / 0.95 | - |
| Comparative Example 4 | - | $TiO_2$ / 1.0 | $Nb_2O_5$ / 1.0 | $V_2O_5$ / 0.01 |

(X-Ray Diffraction Measurement, Laser Raman Measurement, TEM Measurement, EPMA Measurement, ICP Analysis)

The results of various measurements performed on the samples synthesized in respective Examples and Comparative Examples are shown below.

Powder X-ray diffraction measurement was carried out by the method described above. Rietveld analysis was performed using the obtained diffraction pattern.

From the results of the Rietveld analysis, it could be confirmed that in Examples 1 to 18, the intended crystal phase was obtained as the main phase.

In Comparative Examples 1 and 2, although a main XRD peak mostly agreed with $TiNb_2O_7$, the peak width of the peak was wide, suggesting that the crystallinity was low. There was also the possibility that impurity phases considered to be caused by unreacted titanium dioxide existed.

In Comparative Examples 3 and 4, all the XRD peaks agreed with the $TiNb_2O_7$ structure. In Comparative Examples 3 and 4, it was confirmed that the peak width was narrower and the crystallinity was higher than those in Comparative Examples 1 and 2.

From the results of TEM observation and EPMA measurement, it was confirmed that in the active materials of Examples 1 to 4, the M element (Na, K, or Fe and S) as an additive element and Cu were segregated toward the grain boundary. In the active material of Comparative Example 4, it was found that the element V was segregated towards a portion of a domain constituting the crystal. That is, in these cases, the element added as an external additive species did not replace Nb of the niobium-titanium composite oxide as the main phase, and did not form a solid solution. On the other hand, in the active materials of Examples 5 to 18 and Comparative Example 3, it could be confirmed that the additive element was substituted into the crystal of the niobium-titanium composite oxide or solid-solubilized in the crystal, thereby forming a solid solution.

Table 3 shows the elemental composition in the active material determined by ICP analysis. Specifically, the main phase composition of the active material powder, the external additive species, and the addition amount of the external additive species are shown. Regarding the main phase composition, the values of subscripts in the composition formula $Li_xTiNb_{2-(y+z)}Cu_yM_zO_{7+\delta}$ are summarized.

[Table 3]

| | Main phase composition | External additive species / added amount | x | y | z | $\delta$ |
|---|---|---|---|---|---|---|
| Example 1 | $TiNb_2O_7$ | Cu / $1\times10^{-4}$ Na / 0.1 | 0 | 0 | 0 | 0 |
| Example 2 | $TiNb_2O_7$ | Cu / 0.01 K / 0.3 | 0 | 0 | 0 | 0 |
| Example 3 | $TiNb_2O_7$ | Cu / 0.5 K / 0.5 | 0 | 0 | 0 | 0 |
| Example 4 | $TiNb_2O_7$ | Cu / 0.5 Fe / 0.1 S / 0.2 | 0 | 0 | 0 | 0 |
| Example 5 | $TiNb_{1.96}Cu_{0.01}Mo_{0.03}O_7$ | - | 0 | 0.01 | 0.03 | 0 |
| Example 6 | $TiNb_{1.96}Cu_{0.01}Mo_{0.03}O_7$ | - | 0 | 0.01 | 0.03 | 0 |
| Example 7 | $TiNb_{1.96}Cu_{0.01}Mo_{0.03}O_7$ | - | 0 | 0.01 | 0.03 | 0 |
| Example 8 | $TiNb_{1.8}Cu_{0.05}Mo_{0.15}O_7$ | - | 0 | 0.05 | 0.15 | 0 |

(continued)

| | Main phase composition | External additive species / added amount | x | y | z | δ |
|---|---|---|---|---|---|---|
| Example 9 | $TiNb_{1.6}Cu_{0.1}Mo_{0.3}O_7$ | - | 0 | 0.1 | 0.3 | 0 |
| Example 10 | $TiNb_{1.2}Cu_{0.2}Mo_{0.6}O_7$ | - | 0 | 0.2 | 0.6 | 0 |
| Example 11 | $TiNb_{1.86}Cu_{0.01}Mo_{0.03}Ta_{0.1}O_7$ | - | 0 | 0.01 | 0.13 | 0 |
| Example 12 | $TiNb_{1.45}Cu_{0.1}Mo_{0.4}Mn_{0.05}O_7$ | - | 0 | 0.1 | 0.45 | 0 |
| Example 13 | $TiNb_{1.45}Cu_{0.1}Mo_{0.4}Co_{0.05}O_7$ | - | 0 | 0.1 | 0.45 | 0 |
| Example 14 | $TiNb_{1.45}Cu_{0.1}Mo_{0.4}Ni_{0.05}O_7$ | - | 0 | 0.1 | 0.45 | 0 |
| Example 15 | $TiNb_{1.45}Cu_{0.1}Mo_{0.4}Fe_{0.05}O_7$ | - | 0 | 0.1 | 0.45 | 0 |
| Example 16 | $TiNb_{1.7}Cu_{0.05}Mo_{0.2}Sn_{0.05}O_7$ | - | 0 | 0.05 | 0.25 | 0 |
| Example 17 | $TiNb_{1.7}Cu_{0.05}Mo_{0.2}Si_{0.05}O_7$ | - | 0 | 0.05 | 0.25 | 0 |
| Example 18 | $TiNb_{1.7}Cu_{0.05}Mo_{0.15}P_{0.1}O_7$ | - | 0 | 0.05 | 0.25 | 0 |
| Comparative Example 1 | $TiNb_2O_7$ | - | 0 | 0 | 0 | 0 |
| Comparative Example 2 | $TiNb_2O_{6.8}$ | - | 0 | 0 | 0 | -0.2 |
| Comparative Example 3 | $TiNb_{1.9}Mo_{0.075}Mg_{0.025}O_7$ | - | 0 | 0 | 0.1 | 0 |
| Comparative Example 4 | $TiNb_2O_7$ | $V_2O_5$ / 0.01 | 0 | 0 | 0 | 0 |

Table 4 shows the molar ratio of the elemental composition obtained from the ICP analysis. Specifically, the molar ratio (Cu/Ti), the molar ratio (M/Ti), and the molar ratio (Nb/Ti) are summarized.

[Table 4]

| | Cu / Ti | M / Ti | Nb / Ti |
|---|---|---|---|
| Example 1 | $1\times10^{-4}$ | 0.1 | 2 |
| Example 2 | 0.01 | 0.3 | 2 |
| Example 3 | 0.5 | 0.5 | 2 |
| Example 4 | 0.5 | 0.3 | 2 |
| Example 5 | 0.01 | 0.03 | 1.96 |
| Example 6 | 0.01 | 0.03 | 1.96 |
| Example 7 | 0.01 | 0.03 | 1.96 |
| Example 8 | 0.05 | 0.15 | 1.8 |
| Example 9 | 0.1 | 0.3 | 1.6 |
| Example 10 | 0.2 | 0.6 | 1.2 |
| Example 11 | 0.01 | 0.13 | 1.86 |
| Example 12 | 0.1 | 0.45 | 1.45 |
| Example 13 | 0.1 | 0.45 | 1.45 |
| Example 14 | 0.1 | 0.45 | 1.45 |
| Example 15 | 0.1 | 0.45 | 1.45 |
| Example 16 | 0.05 | 0.25 | 1.7 |

(continued)

| | Cu / Ti | M / Ti | Nb / Ti |
|---|---|---|---|
| Example 17 | 0.05 | 0.25 | 1.7 |
| Example 18 | 0.05 | 0.25 | 1.7 |
| Comparative Example 1 | 0 | 0 | 2 |
| Comparative Example 2 | 0 | 0 | 2 |
| Comparative Example 3 | 0 | 0.1 | 1.9 |
| Comparative Example 4 | 0 | 0 | 2 |

As a result of quantifying the amount of the oxygen ion deficiency by using synchrotron X-ray diffraction measurement and laser Raman measurement in combination, oxygen deficiency was confirmed in the active material of Comparative Example 2. No oxygen deficiency was confirmed in other samples.

From the results of measuring the powder specific resistance of each sample by the above-described method, it was confirmed that in Examples 6 and 7, the electrical conductivity was improved by the carbon coating treatment. In Comparative Example 2, although the powder specific resistance decreased as compared with that before carbon coating (Comparative Example 1), the powder specific resistance was higher than that in Examples 6 and 7. The reason why the powder specific resistance was high in Comparative Example 2 despite the fact that the carbonization temperatures were the same in Comparative Example 2 and Example 7 is considered to be that a portion where carbonization was not sufficient was formed in the carbon material, due to reduction of a composite oxide surface.

Table 5 shows the carbonization treatment temperature, carbonization treatment time, powder specific resistance, and amount of oxygen deficiency in the carbon coating treatment. In Examples 1 to 5 and 8 to 18, and in Comparative Examples 1 and 3 to 4, no carbon coating treatment was carried out.

[Table 5]

| | Carbonization treatment temperature (°C) | Carbonization treatment time (hr) | Powder specific resistance | Oxygen deficiency amount |
|---|---|---|---|---|
| Example 1 | (no treatment) | (no treatment) | $7.8\times10^{1}$ | 0 |
| Example 2 | (no treatment) | (no treatment) | $7.2\times10^{1}$ | 0 |
| Example 3 | (no treatment) | (no treatment) | $6.5\times10^{1}$ | 0 |
| Example 4 | (no treatment) | (no treatment) | $6.3\times10^{1}$ | 0 |
| Example 5 | (no treatment) | (no treatment) | $6.8\times10^{1}$ | 0 |
| Example 6 | 500 | 1 | $6.3\times10^{1}$ | 0 |
| Example 7 | 700 | 1 | $3.9\times10^{1}$ | 0 |
| Example 8 | (no treatment) | (no treatment) | $6.1\times10^{1}$ | 0 |
| Example 9 | (no treatment) | (no treatment) | $6.2\times10^{1}$ | 0 |
| Example 10 | (no treatment) | (no treatment) | $6.2\times10^{1}$ | 0 |
| Example 11 | (no treatment) | (no treatment) | $5.9\times10^{1}$ | 0 |
| Example 12 | (no treatment) | (no treatment) | $6.0\times10^{1}$ | 0 |
| Example 13 | (no treatment) | (no treatment) | $6.2\times10^{1}$ | 0 |
| Example 14 | (no treatment) | (no treatment) | $6.3\times10^{1}$ | 0 |
| Example 15 | (no treatment) | (no treatment) | $6.1\times10^{1}$ | 0 |
| Example 16 | (no treatment) | (no treatment) | $5.9\times10^{1}$ | 0 |
| Example 17 | (no treatment) | (no treatment) | $5.9\times10^{1}$ | 0 |
| Example 18 | (no treatment) | (no treatment) | $6.4\times10^{1}$ | 0 |

(continued)

| | Carbonization treatment temperature (°C) | Carbonization treatment time (hr) | Powder specific resistance | Oxygen deficiency amount |
|---|---|---|---|---|
| Comparative Example 1 | (no treatment) | (no treatment) | $2.1\times10^{2}$ | 0 |
| Comparative Example 2 | 700 | 1 | $8.0\times10^{1}$ | -0.2 |
| Comparative Example 3 | (no treatment) | (no treatment) | $9.0\times10^{1}$ | 0 |
| Comparative Example 4 | (no treatment) | (no treatment) | $8.5\times10^{1}$ | 0 |

(Production of Electrochemical Measurement Cell)

The active material powder synthesized above was blended with acetylene black used as an electro-conductive agent. 10 parts by mass of acetylene black was mixed with 100 parts by mass of the active material. This mixture was dispersed in N-methyl-2-pyrrolidone (NMP). Polyvinylidene fluoride (PVdF) was mixed as a binder with the obtained dispersion solution to produce an electrode slurry. PVdF was used in an amount of 10 parts by mass based on 100 parts by mass of the active material. This slurry was applied to both of reverse surfaces of a current collector made of an aluminum foil using a blade. Then, the slurry was dried at 130°C under vacuum for 12 hours to obtain an electrode.

Ethylene carbonate and diethyl carbonate were mixed in a ratio by volume of 1 : 1 to prepare a mixed solvent. Lithium hexafluorophosphate was dissolved in a concentration of 1 M in this mixed solvent to prepare a nonaqueous electrolyte.

The electrode manufactured above, a metal lithium foil as a counter electrode, and the prepared nonaqueous electrolyte were used to produce an electrochemical measurement cell.

(Electrochemical Measurement)

A charge/discharge test was carried out at room temperature using each of the produced electrochemical measuring cells. The charging and discharging were carried out at a potential range of 1.0 V or more and 3.0 V or less (vs. $Li/Li^{+}$) based on an oxidation-reduction potential of lithium and at a charge/discharge current of 0.2 C (hourly discharge rate).

A charge capacity and a discharge capacity at the first charge-and-discharge were measured. An initial charge/discharge efficiency was calculated by dividing the discharge capacity at the first charge-and-discharge by the charge capacity (initial charge/discharge efficiency = initial discharge capacity/initial charge capacity × 100%).

Then, charging and discharging were repeated for 100 cycles. One cycle included one charging period and one discharging period. Here, the charging and discharging were carried out at room temperature in a potential range of 1.0 V or more and 3.0 V or less (vs. $Li/Li^{+}$) based on the oxidation-reduction potential of lithium and at a current of 1 C (hourly discharge rate).

After charging and discharging at the 100th cycle, charging and discharging were carried out again at 0.2 C (hourly discharge rate), and the discharge capacity was measured. A capacity retention ratio after 100 cycles was calculated by dividing the discharge capacity after 100 cycles by the initial discharge capacity (capacity retention ratio after 100 cycles = discharge capacity after 100 cycles/initial discharge capacity × 100%).

Rate performance (rapid charge/discharge performance) was investigated. 0.2C discharge capacity and 10C discharge capacity were measured. A ratio of the 10C discharge capacity to the 0.2C discharge capacity (0.2C discharge capacity/10C discharge capacity × 100%) was calculated.

Table 3 shows the initial discharge capacity, the initial charge/discharge efficiency (%), the discharge capacity retention ratio (%) after 100 cycles, and the 0.2C/10C discharge capacity ratio obtained by the tests for each electrochemical measuring cell.

[Table 6]

| | Initial discharge capacity (mAh / g) | Initial charge/discharge efficiency (%) | 10C/0.2C discharge capacity ratio (%) | Capacity retention ratio after 100 cycles (%) |
|---|---|---|---|---|
| Example 1 | 278.7 | 93.6 | 87.4 | 95.0 |
| Example 2 | 286.3 | 94.1 | 88.2 | 95.9 |
| Example 3 | 282.9 | 94.8 | 89.3 | 95.6 |
| Example 4 | 279.8 | 94.4 | 88.5 | 94.3 |
| Example 5 | 283.6 | 94.3 | 88.1 | 94.7 |
| Example 6 | 283.5 | 92.0 | 87.9 | 94.6 |
| Example 7 | 283.8 | 94.4 | 90.5 | 97.8 |
| Example 8 | 281.2 | 94.2 | 87.9 | 95.1 |
| Example 9 | 275.4 | 94.0 | 87.7 | 94.8 |
| Example 10 | 274.5 | 93.8 | 87.5 | 94.4 |
| Example 11 | 283.0 | 94.2 | 88.0 | 95.3 |
| Example 12 | 283.2 | 94.1 | 87.9 | 95.5 |
| Example 13 | 282.7 | 93.9 | 87.6 | 94.9 |
| Example 14 | 283.3 | 94.0 | 87.8 | 95.0 |
| Example 15 | 282.8 | 93.8 | 87.7 | 95.2 |
| Example 16 | 285.1 | 93.6 | 88.2 | 95.4 |
| Example 17 | 281.9 | 93.8 | 88.4 | 95.1 |
| Example 18 | 279.2 | 94.0 | 87.5 | 95.3 |
| Comparative Example 1 | 265.0 | 90.4 | 81.3 | 75.7 |
| Comparative Example 2 | 259.3 | 88.2 | 82.1 | 70.3 |
| Comparative Example 3 | 276.1 | 93.4 | 86.9 | 93.6 |
| Comparative Example 4 | 273.2 | 92.8 | 87.1 | 93.7 |

As shown in Table 6, in Examples 1 to 5, 7 to 8, and 11 to 18, the discharge capacity, charge/discharge efficiency, rate performance, and capacity retention ratio of the electrochemical measuring cell were higher than those in Comparative Examples 1 to 4.

In Example 6, the discharge capacity, charge/discharge efficiency, rate performance, and capacity retention ratio of the electrochemical measuring cell were higher than those in Comparative Examples 1 and 2. In Example 6, although the initial charge/discharge efficiency of the electrochemical measuring cell was comparable to that in Comparative Examples 3 and 4, the initial discharge capacity, rate performance, and capacity retention ratio in Example 6 were higher than those in Comparative Examples 3 and 4.

In Examples 9 and 10, the discharge capacity, charge/discharge efficiency, rate performance, and capacity retention ratio of the electrochemical measuring cell were higher than those in Comparative Examples 1, 2, and 4. In Examples 9 and 10, although the discharge capacity of the electrochemical measuring cell was comparable to that in Comparative Example 3, the charge/discharge efficiency, rate performance, and capacity retention ratio in Examples 9 and 10 were higher than those in Comparative Example 3.

In Comparative Example 1, the capacity retention ratio after 100 cycles was 75.7%, whereas Examples 1 to 18 all showed a high capacity ratio of 94% or more. That is, these examples exhibited excellent performance with respect to the discharge capacity after 100 cycles.

In Examples 1 to 18, the capacity retention ratio at high rate discharge with a current of 10 C was high, indicating that output performance was excellent.

According to at least one approach and example described above, an active material containing a niobium-titanium composite oxide, Cu and at least one element M selected from the group consisting of Na, K, Si, S, Sn, P, Ta, Mo, Mn, Co, Ni and Fe,
wherein a molar ratio (Cu/Ti) of Cu to Ti satisfies formula (I):

$$1\times10^{-4} \leq Cu/Ti \leq 0.5 \qquad (I),$$

a molar ratio (M/Ti) of the element M to Ti satisfies formula (II):

$$0 < M/Ti \leq 0.6 \qquad (II),$$

and a molar ratio (Nb/Ti) of Nb to Ti satisfies formula (III):

$$1 \leq Nb/Ti \leq 5 \qquad (III)$$

is provided. This active material can provide a secondary battery and battery pack which exhibit high energy density and simultaneously realize rapid charge/discharge performance and long life property, and a vehicle on which the battery pack is installed.

## Claims

1. An active material comprising a niobium-titanium composite oxide, Cu, and at least one element M selected from the group consisting of Na, K, Si, S, Sn, P, Ta, Mo, Mn, Co, Ni and Fe,
wherein a molar ratio (Cu/Ti) of Cu to Ti satisfies formula (I):

$$1\times10^{-4} \leq Cu/Ti \leq 0.5 \qquad (I),$$

a molar ratio (M/Ti) of the element M to Ti satisfies formula (II):

$$0 < M/Ti \leq 0.6 \qquad (II),$$

and a molar ratio (Nb/Ti) of Nb to Ti satisfies formula (III):

$$1 \leq Nb/Ti \leq 5 \qquad (III).$$

2. The active material according to claim 1, wherein the niobium-titanium composite oxide is a copper-containing niobium-titanium composite oxide represented by $Li_xTiNb_{2-(y+z)}Cu_yM_zO_{7+\delta}$ and satisfying $0 \leq x \leq 5$, $1\times10^{-4} \leq y \leq 0.5$, $0 < z \leq 0.6$, and $-0.05 \leq \delta \leq 0.05$, where M is at least one element selected from the group consisting of Na, K, Si, S, Sn, P, Ta, Mo, Mn, Co, Ni and Fe.

3. The active material according to claim 1 or 2, further comprising a carbon material provided on at least a portion of a particle surface of the niobium-titanium composite oxide.

4. The active material according to claim 3, having a powder specific resistance of $5\times10^{1}$ $\Omega\cdot$cm or less.

5. An electrode comprising the active material according to any one of claims 1 to 4.

6. The electrode according to claim 5, wherein the electrode comprises an active material-containing layer comprising the active material.

**7.** The electrode according to claim 6, wherein the active material-containing layer further comprises an electroconductive agent and a binder.

**8.** A secondary battery (100) comprising:

a positive electrode (5);
a negative electrode (3); and
an electrolyte,
wherein the negative electrode (3) is the electrode according to any one of claims 5 to 7.

**9.** A battery pack (300) comprising the secondary battery (100) according to claim 8.

**10.** The battery pack (300) according to claim 9, further comprising:

an external power distribution terminal (347); and
a protective circuit (344).

**11.** The battery pack (300) according to claim 9 or 10, comprising plural of the secondary battery (100), the secondary batteries (100) being electrically connected in series, in parallel, or in a combination of in a series and in parallel.

**12.** A vehicle (400) comprising the battery pack (300) according to any one of claims 9 to 11.

**13.** The vehicle (400) according to claim 12, which comprises a mechanism configured to convert kinetic energy of the vehicle (400) into regenerative energy.

**Patentansprüche**

**1.** Aktivmaterial, umfassend ein Niob-Titan-Kompositoxid, Cu und mindestens ein Element M, ausgewählt aus der Gruppe, bestehend aus Na, K, Si, S, Sn, P, Ta, Mo, Mn, Co, Ni und Fe,
wobei ein Molverhältnis (Cu/Ti) von Cu zu Ti die Formel (I) erfüllt:

$$1\times10^{-4} \leq Cu/Ti \leq 0,5 \qquad (I),$$

ein Molverhältnis (M/Ti) von dem Element M zu Ti die Formel (II) erfüllt:

$$0 < M/Ti \leq 0,6 \qquad (II),$$

und ein Molverhältnis (Nb/Ti) von Nb zu Ti die Formel (III) erfüllt:

$$1 \leq Nb/Ti \leq 5 \qquad (III).$$

**2.** Aktivmaterial gemäß Anspruch 1, wobei das Niob-Titan-Kompositoxid ein kupferhaltiges Niob-Titan-Kompositoxid ist, das durch $Li_xTiNb_{2-(y+z)}Cu_yM_zO_{7+\delta}$ dargestellt wird und $0 \leq x \leq 5$, $1\times10^{-4} \leq y \leq 0,5$, $0 < z \leq 0, 6$ und $-0,05 \leq \delta \leq 0,05$ erfüllt, wobei M mindestens ein Element ist, das aus der Gruppe ausgewählt ist, die aus Na, K, Si, S, Sn, P, Ta, Mo, Mn, Co, Ni und Fe besteht.

**3.** Aktivmaterial gemäß Anspruch 1 oder 2, weiterhin umfassend ein Kohlenstoffmaterial, das auf mindestens einem Teil einer Partikeloberfläche des Niob-Titan-Kompositoxids angeordnet ist.

**4.** Aktivmaterial gemäß Anspruch 3, das einen pulverspezifischen Widerstand von $5\times10^{1}$ $\Omega\cdot$cm oder weniger aufweist.

**5.** Elektrode, umfassend das Aktivmaterial gemäß einem der Ansprüche 1 bis 4.

**6.** Elektrode gemäß Anspruch 5, wobei die Elektrode eine Aktivmaterial enthaltende Schicht umfasst, die das Aktivmaterial umfasst.

7. Elektrode gemäß Anspruch 6, wobei die Aktivmaterial enthaltende Schicht weiterhin ein elektrisch leitendes Mittel und ein Bindemittel umfasst.

8. Sekundärbatterie (100), umfassend:

eine positive Elektrode (5);
eine negative Elektrode (3); und
einen Elektrolyt,
wobei die negative Elektrode (3) die Elektrode gemäß einem der Ansprüche 5 bis 7 ist.

9. Batteriepack (300), umfassend die Sekundärbatterie (100) gemäß Anspruch 8.

10. Batteriepack (300) gemäß Anspruch 9, weiterhin umfassend:

einen externen Stromverteilungsanschluss (347); und
eine Schutzschaltung (344).

11. Batteriepack (300) gemäß Anspruch 9 oder 10, umfassend mehrere der Sekundärbatterien (100), wobei die Sekundärbatterien (100) elektrisch in Reihe, parallel oder in einer Kombination von in Reihe und parallel geschaltet sind.

12. Fahrzeug (400), umfassend den Batteriepack (300) gemäß einem der Ansprüche 9 bis 11.

13. Fahrzeug (400) gemäß Anspruch 12, das einen Mechanismus umfasst, der konfiguriert ist, um kinetische Energie des Fahrzeugs (400) in regenerative Energie umzuwandeln.

**Revendications**

1. Matériau actif comprenant un oxyde composite de niobium-titane, du Cu et au moins un élément M sélectionné à partir du groupe constitué de Na, K, Si, S, Sn, P, Ta, Mo, Mn, Co, Ni et Fe,
dans lequel un rapport molaire (Cu/Ti) de Cu sur Ti satisfait la formule (I) :

$$1x10^{-4} \leq Cu/Ti \leq 0,5 \qquad (I),$$

un rapport molaire (M/Ti) de l'élément M sur Ti satisfait la formule (II) :

$$0 < M/Ti \leq 0,6 \qquad (II),$$

et un rapport molaire (Nb/Ti) de Nb sur Ti satisfait la formule (III) :

$$1 \leq Nb/Ti \leq 5 \qquad (III).$$

2. Matériau actif selon la revendication 1, dans lequel l'oxyde composite de niobium-titane est un oxyde composite de niobium-titane contenant du cuivre représenté par $Li_xTiNb_{2-(y+z)}Cu_yM_zO_{7+\delta}$ et satisfaisant $0 \leq x \leq 5$, $1x10^{-4} \leq y \leq 0,5$, $0 < z \leq 0,6$ et $-0,05 \leq \delta \leq 0,05$, où M est au moins un élément sélectionné à partir du groupe constitué de Na, K, Si, S, Sn, P, Ta, Mo, Mn, Co, Ni et Fe.

3. Matériau actif selon la revendication 1 ou 2, comprenant en outre un matériau de carbone disposé sur au moins une partie d'une surface de particule de l'oxyde composite de niobium-titane.

4. Matériau actif selon la revendication 3, présentant une résistance spécifique de poudre de $5x10^1$ Ω·cm ou moins.

5. Électrode comprenant le matériau actif selon l'une quelconque des revendications 1 à 4.

6. Électrode selon la revendication 5, dans laquelle l'électrode comprend une couche contenant un matériau actif comprenant le matériau actif.

7. Électrode selon la revendication 6, dans laquelle la couche contenant un matériau actif comprend en outre un agent électroconducteur et un liant.

8. Batterie secondaire (100) comprenant :

   une électrode positive (5) ;
   une électrode négative (3) ; et
   un électrolyte,
   dans laquelle l'électrode négative (3) est l'électrode selon l'une quelconque des revendications 5 à 7.

9. Bloc-batterie (300) comprenant la batterie secondaire (100) selon la revendication 8.

10. Bloc-batterie (300) selon la revendication 9, comprenant en outre :

   une borne de distribution de poudre externe (347) ; et
   un circuit de protection (344).

11. Bloc-batterie (300) selon la revendication 9 ou 10, comprenant une pluralité de la batterie secondaire (100), les batteries secondaires (100) étant connectées électriquement en série, en parallèle ou dans une combinaison d'en série et d'en parallèle.

12. Véhicule (400) comprenant le bloc-batterie (300) selon l'une quelconque des revendications 9 à 11.

13. Véhicule (400) selon la revendication 12, qui comprend un mécanisme configuré pour convertir l'énergie cinétique du véhicule (400) en énergie régénérative.

102
104
101
103
105
106
c
b
a

FIG. 1

102
107
101
107
b
a
c

FIG. 2

100
1
2
A
6
7

FIG. 3

A
2
3a
3b
3
4
5b
5a
5b
5
4
3b
3a
3b
3
4
5b
5a
5b
5
4

FIG. 4

2
7
6
1
B
100

FIG. 5

4
5
3
5
3
5
3
5
5b
5a
5b
3b
3a
3
3b
3c
3c
3c
3c
4
6
B

F I G. 6

200
+
−
22
21
7
6
23
7
6
100a
100b
100c
100d
100e


F I G. 7

32
300
200
24
33
33
100
6
7
23
33
34
342
344
35
35
7
22
341
347
31

F I G. 8

341
22
345
344
347
348a
+
–
100
200
Protective
circuit
35
348b
Thermistor
346
343
342
23

F I G. 9

400
40
300

F I G. 10

400
40
42
Electric control unit (ECU)
43
External power connection terminal
411
Battery management unit (BMU)
41
412
L1
414
L2
Battery module monitoring unit
Battery module
301a
301b
301c
200a
200b
200c
300a
300b
300c
413
415
44
45
W

F I G. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010287496 A
- JP 2012199146 A

### Non-patent literature cited in the description

- *Journal of Power Sources,* 2016, vol. 328, 336-344
- Journal of Solid-State Chemistry. 1984, vol. 53, 144-147